# EUROPÄISCHE PATENTSCHRIFT

(11) **EP 3 176 966 B1**
(45) Veröffentlichungstag und Bekanntmachung des Hinweises auf die Patenterteilung: **17.01.2018**
(21) Anmeldenummer: 16202240.4
(22) Anmeldetag: 05.12.2016
(51) Int. Cl.: H04B 17/10, G01S 3/00, H01Q 3/00, H04B 7/06, H04B 17/20

(54) **RICHTFUNKSYSTEM UND VERFAHREN ZUR AUTOMATISCHEN ANTENNENAUSRICHTUNG**
DIRECTIONAL RADIO RELAY SYSTEM AND METHOD FOR THE AUTOMATIC ORIENTATION OF AN ANTENNA
FAISCEAU HERTZIEN ET PROCÉDÉ D'ORIENTATION AUTOMATIQUE D'ANTENNE

(30) Priorität: 03.12.2015 DE 102015224237
(43) Veröffentlichungstag der Anmeldung: 07.06.2017
(73) Patentinhaber: IHP GmbH - Innovations for High Performance Microelectronics / Leibniz-Institut für innovative Mikroelektronik, 15236 Frankfurt (Oder) (DE)
(72) Erfinder: Petri, Markus, 15232 Frankfurt (Oder) (DE); Ehrig, Marcus, 10787 Berlin (DE)
(74) Vertreter: Eisenführ Speiser

(56) Entgegenhaltungen:
- DE-A1-102013 218 862

## Beschreibung

Die Erfindung betrifft ein Verfahren zur automatischen Ausrichtung von Antennen von Stationen einer Richtfunkstrecke, einen Master-Senderempfänger sowie ein Betriebsverfahren für einen Master-Senderempfänger. Desweiteren betrifft die Erfindung einen Slave-Senderempfänger sowie ein Betriebsverfahren für einen Slave-Senderempfänger und eine Richtfunkanordnung.

Richtfunksysteme, insbesondere mit Wellenlängen im Bereich von Millimeterwellen (60 GHz, 70 - 80 GHz, 90 GHz), verwenden unter anderem aufgrund frequenzregulatorischer Vorschriften Antennen mit sehr starker Richtwirkung, d. h. einer sehr schmalen Abstrahlungscharakteristik. Die typischen Öffnungswinkel von 60 GHz-Richtfunksystemen liegen beispielsweise zwischen 0,5° und 3°. Es sind jedoch teilweise auch noch stärker bündelnde Antennen im Einsatz. Der sehr kleine Öffnungswinkel der Antennen und der daraus folgende kleine Strahldurchmesser führen, vor allem in Verbindung mit nicht festgelegten Entfernungen zwischen zwei Richtfunkstationen, zu großen Schwierigkeiten bei der Ausrichtung der Antennen. Richtfunkstationen werden nachfolgend der Kürze halber auch einfach als Stationen bezeichnet.

Eine manuelle Ausrichtung der Antennen ist sehr zeitaufwendig und bedarf zusätzlicher Hilfsmittel. Aufgrund der geringen Strahldurchmesser ist eine automatische Antennenjustage jedoch schwierig. Insbesondere im typischen Fall eines Punkt-zu-Punkt Richtfunksystems, in dem die Stationen nicht über eine unabhängige zusätzliche Kommunikationsverbindung (d.h. einen Seitenkanal) verfügen, ist kein Datenaustausch parallel zur Ausrichtung und damit keine synchron und zentral gesteuerte Ausrichtung des Antennenstrahls möglich. Stattdessen müssen die beteiligten Stationen selbstständig eine Suche nach einem Kommunikationspartner durchführen, indem der Antennenstrahl über alle möglichen Strahlpositionen geschwenkt wird.

US 2010/0302101 A1 beschreibt ein hierbei eingesetztes Verfahren, das auf zwei unterschiedlichen Schwenkgeschwindigkeiten der Stationen basiert. Eine Station schwenkt den Strahl schnell und periodisch über alle ihre Strahlpositionen, während die zweite Station ihren Strahl langsam schwenkt und die gleiche Zeit in einer Position verbleibt, die die erste Station für den Schwenk über alle Positionen benötigt. Somit wird sichergestellt, dass sämtliche Kombinationen der Strahlpositionen getestet werden und die Stationen einander finden.

Die in US 2010/0302101 A1 beschriebene Vorgehensweise resultiert in einer langen Suchzeit, da durch die kleinen Strahldurchmesser und die daraus folgende große Anzahl an Strahlrichtungen viele Kombinationsmöglichkeiten getestet werden müssen. Zusätzlich wird bei dem dort beschriebenen Verfahren eine Information über die Pfaddämpfung (z. B. anhand der Entfernung) benötigt, um den Suchraum einzugrenzen und die Suchzeit zu verringern. Die Information über die Pfaddämpfung muss entweder bei jeder Station manuell eingegeben oder über einen Seitenkanal übermittelt werden.

DE 10 2013 218 862 beschreibt ein zweistufiges Suchverfahren, wobei in einer ersten Phase der Master und der Slave eine Bestimmung einer wechselseitigen Grobausrichtung zum Signalaustausch durchführen. Darauf aufbauend bestimmt der Master in einer zweiten Phase je eine Steuerungsstrahlrichtung des Masters und des Slaves und gibt dem Slave dessen Steuerungsstrahlrichtung vor. Anschließend gibt der Master dem Slave jeweils eine neue Strahlrichtung und eine Verweilzeit vor und sendet dann Suchsignale ohne Wartezeit. Währenddessen führt der Slave eine Signalqualitätsparameterbestimmung für jedes empfangene Signal durch und speichert deren Ergebnisse. Nach Ablauf der Verweilzeit richten sich beide Stationen in die jeweilige Steuerungsstrahlrichtung aus und der Slave übermittelt die Signalqualitätsparameterbestimmungsergebnisse, auf deren Grundlage eine optimale Ausrichtung der Antennen von Master und Slave bestimmt und durchgeführt wird.

Wünschenswert ist also eine beschleunigte automatische Ausrichtung von Antennen einer Richtfunkstrecke ohne Notwendigkeit einer Steuerkommunikation über einen eigens vorzusehenden Seitenkanal oder einer manuellen Interaktion.

Diese Aufgabe wird gemäß einem ersten Aspekt gelöst durch ein Verfahren zur automatischen Ausrichtung von Antennen von Stationen einer Richtfunkstrecke, wobei eine Station als Master und mindestens eine andere Station als Slave konfiguriert ist; wobei

in einer ersten Phase
- der Master und der Slave anhand einer vorbestimmten Anzahl wechselseitiger Ausrichtungen eine Abtastung zur Bestimmung einer Erstausrichtung durchführen, als welche zeitlich unmittelbar die erste der eingestellten wechselseitigen Ausrichtungen bestimmt wird, in der Master und Slave Signale miteinander austauschen können, und
- die bestimmte Erstausrichtung als eine Steuerungsstrahlrichtung des Masters, nachfolgend Master-Steuerungsstrahlrichtung, und als eine Steuerungsstrahlrichtung des Slaves, nachfolgend Slave-Steuerungsstrahlrichtung, festgelegt wird, und
- ermittelt wird, ob die eingestellte Erstausrichtung einer direkten Sichtverbindung des Masters mit dem Slave entspricht, anschließend
- entweder, nämlich im Falle, dass die eingestellte Erstausrichtung einer direkten Sichtverbindung entspricht, in eine dritte Phase gesprungen wird,
- oder, nämlich im Falle, dass die eingestellte Erstausrichtung einer direkten Sichtverbindung nicht entspricht;
in einer zweiten Phase
- über eine Anzahl von Iterationen in einer jeweiligen Iterationsschleife
   - der Master eine neue Slave-Strahlrichtung und eine Verweilzeit, in der der Slave in dieser neuen Slave-Strahlrichtung empfangen soll, dem Slave vorgibt,
   - der Master anschließend Suchsignale in eine vorbestimmte Anzahl seiner Master-Strahlrichtungen sendet, ohne eine Wartezeit in den Master-Strahlrichtungen zu verbleiben,
   - nach dem Ablauf der Verweilzeit der Master die Master-Steuerungsstrahlrichtung und der Slave die Slave-Steuerungsstrahlrichtung einstellt und der Slave entweder Suchsignal-Empfangsdaten bezüglich der aus den Master-Strahlrichtungen empfangenen Suchsignale zur Signalqualitätsparameterbestimmung an den Master übermittelt oder Ergebnisse einer beim Slave selbst durchgeführten Signalqualitätsparameterbestimmung bezüglich der aus den Master-Strahlrichtungen empfangenen Suchsignale an den Master übermittelt,
   - weiterhin ermittelt wird, ob eine der in dieser Iterationsschleife getesteten Strahlkombinationen als Zweitausrichtung einer direkten Sichtverbindung entspricht, und wenn dies der Fall ist, in die dritte Phase gesprungen wird, und wenn dies nicht der Fall ist, die Iterationsschleife unter Vorgabe einer anderen Slave-Strahlrichtung erneut durchgeführt wird; und wobei
in der dritten Phase
- ausgehend von der Erstausrichtung oder der Zweitausrichtung eine vom Master gesteuerte Feinabtastung zur Bestimmung einer Feinausrichtung in einer vorbestimmten Ausrichtungsumgebung der Erstausrichtung oder der Zweitausrichtung durchgeführt wird, die eine nach vorbestimmten Signalqualitätskriterien beste Antennenausrichtung bildet, und danach die bestimmte beste Antennenausrichtung bei Master und Slave eingestellt wird.

Der Erfindung liegt die Erkenntnis zugrunde, dass ein Verfahren zur automatischen Ausrichtung von Antennen einer Richtfunkstrecke zum einen dadurch beschleunigt werden kann, indem zeitlich unmittelbar, nachdem eine Erstausrichtung gefunden wurde, in der der Master und der Slave miteinander kommunizieren können, der Master sofort in einer nachfolgenden zweiten Phase oder dritten Phase seine Abtastgeschwindigkeit erhöht. Dies geschieht vorliegend, indem er keine Verweilzeit in der jeweiligen Master-Strahlrichtung verbleibt, sondern direkt nach Aussenden eines Signals zur nächsten Master-Strahlrichtung wechselt und der Slave durchgehend Signale empfängt und erst nach einem Suchlauf des Masters über eine vorbestimmte Anzahl seiner Master-Strahlrichtungen der Slave dem Master übermittelt, in welcher Strahlrichtung er Signale in welcher Qualität empfangen hat. Der Slave bleibt hierbei für jeden Durchlauf auf einer vom Master vorbestimmten Slave-Strahlrichtung und wechselt erst im nächsten Durchlauf auf eine wiederum vom Master bestimmte neue Slave-Strahlrichtung. Mithilfe dieses Verfahrens können beschleunigte Suchen über alle Kombinationen von Strahlrichtungen von Master und Slave durchgeführt werden. Zum anderen wird das Verfahren der Antennenausrichtung dadurch beschleunigt, dass nach dem Ermitteln der Erstausrichtung sofort in die nächste Phase gesprungen wird, wobei im Falle, dass die Erstausrichtung schon einer als direkte Sichtverbindung klassifizierten Strahlkombination entspricht, nicht mehr der gesamte Suchraum, sondern nur noch ein kleiner Teil in der lokalen Umgebung der gefundenen Strahlkombination getestet wird. Dem liegt die Erkenntnis zugrunde, dass beim Vorhandensein einer direkten Sichtverbindung (engl. line of sight, LOS) diese stets die optimale Verbindung im Vergleich zu möglichen vorhandenen nicht direkten Sichtverbindungen (engl. Non-line-of sight, NLOS) ist. Wenn dagegen als Erstausrichtung keine LOS-Verbindung gefunden wird, springt das Verfahren in die zweite Phase und findet dort entweder eine LOS-Verbindung oder die beste NLOS-Verbindung durch die beschriebene Suche in der zweiten Phase und/oder die zusätzliche Feinabtastung in der dritten Phase. Die Suche kann in der zweiten Phase vorteilhafter auf den Bereich derjenigen wechselseitigen Ausrichtungen beschränkt werden, die durch die erste Phase noch nicht abgedeckt wurden. Auch dies kürzt die Verfahrensführung ab.

Mit Ausrichtung ist im Bezug auf Antennen im Rahmen der vorliegenden Anmeldung in unterschiedlichen Ausführungen beispielsweise eine Ausrichtung einer Antenne mit mechanischen Mitteln gemeint, oder beispielsweise eine Ausrichtung der Antenne, die allein oder zusätzlich durch elektronische Beeinflussung der Abstrahlcharakteristik, wie sie beispielsweise durch Beamsteering eingestellt werden kann.

Der Begriff Strahlrichtung wird in Bezug auf Antennen und Stationen einer Richtfunkstrecke im Rahmen der vorliegenden Anmeldung nicht immer im Sinne einer Senderichtung, sondern je nach Zusammenhang (Sender oder Empfänger) alternativ im Sinne einer Empfangsrichtung verwendet.

Nachfolgend werden Ausführungsbeispiele des erfindungsgemäßen Verfahrens beschrieben.

Bevorzugt entspricht die Verweilzeit des Slaves in der zweiten Phase der Zeitspanne, die der Master benötigt, um Suchsignale in die vorbestimmte Anzahl von Master-Strahlrichtungen zu senden. Der Begriff Verweilzeit wird vorliegend für Zeitspannen verwendet, in denen eine jeweilige Station in einer Strahlrichtung bis zum Ende einer vorbestimmten Zeit unabhängig von in dieser Zeit eintreffenden Signalen verweilt. Im Unterschied dazu wird der Begriff Wartezeit für Zeitspannen verwendet, in denen eine jeweilige Station in einer Strahlrichtung verweilt, bis entweder ein bestimmtes Signal eingetroffen oder eine vorbestimmte Zeitspanne abgelaufen ist.

Gemäß einem Ausführungsbeispiel des erfindungsgemäßen Verfahrens umfasst die Abtastung zur Erstausrichtung in der ersten Phase die folgenden Schritte: Der Master sendet ein Suchsignal in eine erste Master-Strahlrichtung und wartet anschließend für eine definierte Wartezeit auf ein Antwortsignal. Er wechselt bei Ausbleiben eines Antwortsignals nach der Wartezeit zu einer zweiten Master-Strahlrichtung. Der Slave wartet in einer ersten Slave-Strahlrichtung eine definierte Wartezeit, die größer ist als die Wartezeit des Masters, auf den Empfang eines Suchsignals und wechselt bei Ausbleiben eines Suchsignals nach der Wartezeit zu einer zweiten Slave-Strahlrichtung. Bei Empfang eines Suchsignals sendet der Slave ein Antwortsignal in die erste Slave-Strahlrichtung. Dieses Verfahren stellt eine Möglichkeit zur Ermittlung der Erstausrichtung dar. Andere Verfahren, die zur Auffindung einer Kombination aus einer Master-Strahlrichtung und einer Slave-Strahlrichtung, in der Master und Slave miteinander kommunizieren können, dienen können, sind ebenso geeignet.

Bei Empfang eines Antwortsignals wird eine Klassifizierung der so hergestellten Verbindung als direkte Sichtverbindung oder als Nicht-Sichtverbindung vorgenommen. Basierend auf dem Ergebnis der Klassifizierung sendet vorzugsweise der Master ein Startsignal in die erste Master-Strahlrichtung, mit dem je nach Ergebnis die zweite Phase der Verfahrensführung oder die dritte Phase der Verfahrensführung eingeleitet wird.

Im Verfahren dieser Ausführungsformen übernimmt also der Master eine Steuerungsfunktionalität für die Kommunikation zwischen Master und Slave und ermöglicht so eine gesteuerte Kommunikation zwischen beiden Stationen während der Suche. Daher ist das erfindungsgemäße Verfahren besonders vorteilhaft in Time-Division-Duplex(TDD)-basierten Verfahren einsetzbar, die keine Möglichkeit zur kontinuierlichen Steuerung haben. In einer Ausführungsform des erfindungsgemäßen Verfahrens arbeiten die Stationen deshalb mit einem TDD-basierten Verfahren. In TDD-basierten Verfahren wird nur ein Frequenzkanal verwendet, sodass die beiden Stationen nicht gleichzeitig ein kontinuierliches Signal während einer Abtastung von Strahlkombinationen senden können. Eine Abtastung von Strahlkombination meint hierbei die Suche von Master und Slave nach Kombinationen ihrer jeweiligen Strahlrichtungen, in denen eine Kommunikation zwischen Master und Slave möglich ist.

In einer Ausführungsform umfasst die Ermittlung, ob die Erstausrichtung einer direkten Sichtverbindung des Masters mit dem Slave entspricht, ein Ermitteln eines Kanalverzögerungsprofils oder einer Kanalimpulsantwort eines Funkübertragungskanals für die Richtfunkstrecke zwischen Master und Slave.

Zusätzlich oder alternativ erfolgt in einer weiteren Ausführungsform ein Übermitteln von Slave-Strahlrichtungsinformation vom Slave an den Master, und der Master, nachdem die Erstausrichtung bestimmt wurde, ermittelt anhand der dann vorliegenden gültigen Slave-Strahlrichtungsinformation und einer eingestellten Master-Strahlrichtung des Masters rechnerisch, ob die eingestellte Erstausrichtung einer direkten Sichtverbindung des Masters mit dem Slave entspricht.

Diese Möglichkeit, die anstatt oder zusätzlich zur Charakterisierung genutzt werden kann, bildet eine Plausibilitätsprüfung anhand geometrischer Überlegungen. Dazu übermittelt die Slave-Station dem Master beispielsweise bei einer Verbindungsinitialisierung einen gewählten Abstrahlungswinkel. Werden bei der Montage beide Stationen in der vertikalen gleich ausgerichtet, d.h. "oben" und "unten" ist definiert, kann daraus gefolgert werden, dass bei der Wahl eines Antennenstrahls nach unten bei beiden Stationen keine direkte Sichtverbindung vorliegen kann. Werden in den Geräten Ein- oder Mehrachsen-Kompasse eingebaut, ist keine Vorgabe der Montageausrichtung notwendig. Stattdessen übermittelt der Slave zusätzlich zum Abstrahlungswinkel auch Kompassinformationen.

Ein solcher Plausibilitätstest ist nicht auf Kompass- / Ausrichtungsinformationen beschränkt, er kann auch anhand von Signallaufzeitmessungen und/oder RSSI-Bestimmungen erfolgen, optional unterstützt durch GPS-Informationen.

Falls ermittelt wird, dass die eingestellte Erstausrichtung oder Zweitausrichtung einer direkten Sichtverbindung des Masters mit dem Slave entspricht, erfolgt im weiteren Verlauf in der dritten Phase vorzugsweise eine Feinabtastung zur Bestimmung einer wechselseitigen Feinausrichtung von Master und Slave, in der Master und Slave Signale miteinander austauschen können, wobei die Feinabtastung eine in ihrer maximalen Ausrichtungsänderung gegenüber der Erstausrichtung beschränkte Anpassung mit dem Kriterium steigender Signalstärke beinhaltet. Es ist aber auch möglich, stattdessen alle in einer lokalen Umgebung liegenden Strahlkombinationen zu testen, entsprechend dem Vorgehen in der zweiten Phase.

Um eine optimale Verbindung zu finden, erfolgt bei dieser Ausführungsform in der dritten Phase nach der Etablierung einer ersten Kommunikationsverbindung in der Erstausrichtung eine Feinjustierung, insbesondere in Richtung des RSSI-Gradienten. Es wird also nur noch eine graduelle Suche in den benachbarten Strahlpositionen vorgenommen. Dies ermöglicht eine besonders schnelle Verfahrensführung. Andere Ausführungsformen sehen vor, alternativ oder ergänzend zum RSSI-Gradienten verfahrensbegleitend ermittelte Werte einer Fehlerrate oder ein verfahrensbegleitend ermitteltes Kanalprofil bei der Durchführung der Feinjustierung heranzuziehen. Vorzugsweise wird das Verfahren bei Stationen eingesetzt, die in einem Frequenzbereich oberhalb von 50 GHz arbeiten. In diesen Frequenzbereichen sind teilweise hohe Antennengewinne und damit sehr kleine Strahlweiten frequenzregulatorisch für den Außenbereich vorgeschrieben, so dass ein Verfahren zu Ausrichtung benötigt wird. Bei niedrigeren Frequenzen sind zur Realisierung hoher Antennengewinne sehr große Antennen notwendig. Oberhalb von 50 GHz sind auch stark bündelnde Antennen relativ klein. Das Verfahren kann aber auch in allen anderen Frequenzbereichen genutzt werden, sofern gerichtete Antennen mit einstellbarer Ausrichtung eingesetzt werden.

In einer Ausführungsform des erfindungsgemäßen Verfahrens werden, um den bestmöglichen Strahl zu finden, in der zweiten Phase alle verbleibenden Strahlkombinationen getestet, die noch nicht in der ersten Phase durchlaufen wurden.

In einer Ausführungsform des Verfahrens können Abbruchkriterien für die Iterationen der zweiten Phase definiert sein. Wird beispielsweise im Rahmen der in der zweiten Phase durchgeführten Iteration eine direkte Sichtverbindung gefunden, erfolgt ja erfindungsgemäß ein Iterationsabbruch und es wird nachfolgend die Feinjustierung in der dritten Phase durchgeführt. Beispielsweise kann ein solches Abbruchkriterium sein, dass eine Ausrichtung gefunden wurde, in der die Signale mit gewünschter Qualität übermittelt werden können. Ein anderes Abbruchkriterium ist beispielsweise, dass eine vorbestimmte Anzahl von Slave-Strahlrichtungen durchlaufen wurde. Mit Hilfe dieser Ausführungsformen kann die Ausrichtung weiter beschleunigt werden. Dabei erstreckt sich der Suchraum dann nicht mehr über alle möglichen Kombinationen und evtl. wird nicht die optimale Kombination gefunden (z. B., wenn durch Reflektionen mehrere Ausrichtungen zu einem Kontakt führen). Dies ist aber unproblematisch, wenn die gefundene Kombination allen Anforderungen für die Datenübertragung genügt.

In der Regel liegen bei der Ausrichtung der Antennen einer Richtfunkstrecke keine Kenntnisse zur Entfernung zwischen den Antennen vor. Die fehlende Entfernungsangabe bedingt, dass stets der kleinste Strahldurchmesser verwendet wird, d. h. der Antennengewinn, der für die maximal spezifizierte Entfernung des Systems notwendig ist. Darüber hinaus ist in einigen Fällen die Verwendung eines größeren Strahldurchmessers, also eines kleineren Antennengewinns, frequenzregulatorisch nicht erlaubt. Zusätzlich wird auch die maximale Sendeleistung verwendet, die für die größtmögliche spezifizierte Entfernung notwendig ist. Ist der Abstand der Stationen aber geringer, so kann dies zu einer Übersteuerung der Eingangsverstärker am Empfänger führen. In den Verfahren im Stand der Technik führt dies dazu, dass eine Kommunikationsverbindung nicht aufgebaut werden kann, da auf das übersteuerte Signal keine Antwort erfolgt und der Sender keine Kenntnis darüber hat, ob die Antwort aufgrund einer fehlenden Übereinstimmung der Strahlrichtungen oder aufgrund einer Übersteuerung des Empfängers ausbleibt. In einer Ausführungsform des Verfahrens misst der Master oder der Slave oder messen der Master und der Slave in der ersten Phase bei einem Erfassen eines übersteuerten Signals die Zeitdauer dieses übersteuerten Signals. Aus der Zeitdauer des übersteuerten Signals und einem Vergleich mit einer Soll-Zeitdauer eines erwarteten Such- oder Antwortsignals wird dann auf den Empfang des erwarteten Such- oder Antwortsignals geschlossen und eine als Reaktion auf den Empfang dieses erwarteten Such- oder Antwortsignal vorgesehene Antwort gesendet. Diese Ausführungsform ermöglicht die Kommunikation zwischen Master und Slave, auch wenn es zu einer Übersteuerung gekommen ist.

Diese Ausführungsform nutzt die Erkenntnis, dass eine Kommunikation trotz Übersteuerung aufgebaut werden kann, wenn die Station, die ein übersteuertes Signal empfängt, die Zeitdauer des übersteuerten Signals misst und aus dieser Zeitdauer und einem Vergleich dieser Zeitdauer mit einer Soll-Zeitdauer eines erwarteten Signals darauf schließen kann, dass das erwartete Signal eingetroffen ist und daraufhin eine entsprechende Antwort auf das erwartete Signal sendet. Besonders vorteilhaft ist es, wenn der Master im Rahmen dieser Ausführungsform, wenn er in der ersten Phase ein übersteuertes Antwortsignal empfängt, aus einer Empfangsleistung des Antwortsignals eine neue Sendeleistung des Suchsignals bestimmt, die niedriger ist als die zuvor verwendete und anschließend der Master das Suchsignal mit der neuen Sendeleistung sendet. Dieser Prozess wird dann vorzugsweise iterativ durchgeführt, bis entweder ein nicht übersteuerter Austausch von Suchsignal und Antwortsignal erfolgt ist oder ein Vorliegen eines Abbruchkriteriums ohne Empfang eines nicht-übersteuerten Signals festgestellt wird. Mithilfe dieses Ausführungsbeispiels des erfindungsgemäßen Verfahrens ist es möglich, zusätzlich zur Optimierung der Ausrichtung der Antennen auch die Sendeleistung automatisch zu optimieren und Kommunikationsabbrüche in grundsätzlich geeigneten Strahlrichtungen wegen Übersteuerung zu vermeiden. Beispielsweise ist der Ablauf einer vorbestimmten maximalen Wartezeit ein geeignetes Abbruchkriterium oder der Durchlauf einer vorbestimmten Anzahl von Iterationen. Vorzugsweise wird nach Vorliegen des Abbruchkriteriums die erste Phase mit einer neuen Master-Strahlrichtung fortgeführt. Nach einem nicht-übersteuerten Austausch von Antwortsignal und Suchsignal sendet in einer bevorzugten Ausführungsform der Master ein Startsignal, mit dem er den Beginn der zweiten Phase oder der dritten Phase auslöst.

Das erfindungsgemäße Verfahren kann nicht nur mit einem Master und einem einzigen Slave durchgeführt werden, sondern auch mit mehreren Slaves, die jeweils in unterschiedlichen Zeitschlitzen adressiert werden. Damit ist der Betrieb einer Richtfunkstrecke mit mehr als zwei Stationen möglich.

Gemäß einem zweiten Aspekt betrifft die Erfindung einen Master-Senderempfänger zum Betrieb einer Richtfunkstrecke, mit einer Sende-Empfangseinheit, die ausgebildet ist, in einstellbaren Richtungen über mindestens eine Antenne Signale zu erzeugen, zu senden und zu empfangen, und
einer Master-Steuereinheit, die ausgebildet ist, zur automatischen Ausrichtung der mindestens einen Antenne

in einer ersten Phase
- die Sende-Empfangseinheit zur Durchführung einer Abtastung zur Bestimmung einer wechselseitigen Erstausrichtung mit einem Slave-Senderempfänger, nachfolgend Slave, anzusteuern, als welche zeitlich unmittelbar die erste der eingestellten wechselseitigen Ausrichtungen bestimmt wird, in der Master und Slave Signale miteinander austauschen können,
- die bestimmte Erstausrichtung als eine Steuerungsstrahlrichtung des Masters, nachfolgend Master-Steuerungsstrahlrichtung, sowie optional zusätzlich eine Steuerungsstrahlrichtung des Slaves, nachfolgend Slave-Steuerungsstrahlrichtung, festzulegen,
- zu ermitteln, ob die eingestellte Erstausrichtung einer direkten Sichtverbindung des Masters mit dem Slave entspricht, anschließend
- entweder, nämlich im Falle, dass die eingestellte Erstausrichtung einer direkten Sichtverbindung entspricht, in eine dritte Phase zu springen,
- oder, nämlich im Falle, dass die eingestellte Erstausrichtung einer direkten Sichtverbindung nicht entspricht,
in einer zweiten Phase
- über eine Anzahl von Iterationen in einer jeweiligen Iterationsschleife
   - eine neue Slave-Strahlrichtung und eine Verweilzeit, in der der Slave in dieser neuen Slave-Strahlrichtung empfangen soll, dem Slave vorzugeben,
   - anschließend Suchsignale in eine vorbestimmte Anzahl der Master-Strahlrichtungen zu senden, ohne eine Wartezeit in den Master-Strahlrichtungen zu verbleiben,
   - nach dem Ablauf der Verweilzeit die Master-Steuerungsstrahlrichtung einzustellen und vom Slave entweder Suchsignal-Empfangsdaten bezüglich der aus den Master-Strahlrichtungen empfangenen Suchsignale zur Signalqualitätsparameterbestimmung zu empfangen oder Ergebnisse einer beim Slave selbst durchgeführten Signalqualitätsparameterbestimmung bezüglich der aus den Master-Strahlrichtungen empfangenen Suchsignale zu empfangen,
   - weiterhin zu ermitteln, ob eine der in dieser Iterationsschleife getesteten Strahlkombinationen als Zweitausrichtung einer direkten Sichtverbindung entspricht, und wenn dies der Fall ist, in die dritte Phase zu springen, und wenn dies nicht der Fall ist, die Iterationsschleife unter Vorgabe einer anderen Slave-Strahlrichtung erneut durchzuführen, und
in der dritten Phase
- ausgehend von der Erstausrichtung oder der Zweitausrichtung eine Feinabtastung zur Bestimmung einer Feinausrichtung in einer vorbestimmten Ausrichtungsumgebung der Erstausrichtung oder der Zweitausrichtung zu steuern und durchzuführen, die eine nach vorbestimmten Signalqualitätskriterien beste Antennenausrichtung bildet, und danach die bestimmte beste Antennenausrichtung einzustellen,

Der Master-Senderempfänger des zweiten Aspekts der Erfindung ist geeignet, zur Durchführung eines Verfahrens gemäß dem ersten Aspekt der Erfindung eingesetzt zu werden bzw. die auf den Master-Senderempfänger bezogenen Teile des Verfahrens durchzuführen. Er wird hier auch kurz als Master bezeichnet. Dies bedeutet jedoch nicht, dass dieser Senderempfänger im Sinne der Erfindung ausschließlich als Master im Sinne der erfindungsgemäßen Verfahrensführung fungieren können muss. Eine solche ausschließliche Funktion ist lediglich als Ausführungsbeispiel zu verstehen. Bevorzugte Ausführungsbeispiele von Senderempfängern sind ausgebildet, sowohl als Master als auch als Slave betrieben werden zu können. In einer solchen Ausführung ist wahlweiser Betrieb als Master oder als Slave durch Steuereingriff vorgebbar. Der Steuereingriff kann im Rahmen eines Installationsprozesses erfolgen.

In einer bevorzugten Ausführungsform ist der Master-Senderempfänger gemäß dem zweiten Aspekt der Erfindung ausgebildet, bei der Abtastung in der ersten Phase ein Suchsignal in eine erste Master-Strahlrichtung zu senden und anschließend für eine definierte Wartezeit auf ein Antwortsignal zu warten und bei Ausbleiben eines Antwortsignals nach der Wartezeit zu einer zweiten Master-Strahlrichtung zu wechseln sowie bei Empfang eines Antwortsignals ein Startsignal in die erste Master-Strahlrichtung auszusenden, mit dem eine zweite Phase eingeleitet wird.

In einer weiteren Ausführungsform ist der Master-Senderempfänger ausgebildet, zur Ermittlung, ob die bestimmte Erstausrichtung oder eine andere wechselseitige Ausrichtung, die einen Signalaustausch zwischen Master und Slave ermöglicht, einer direkten Sichtverbindung des Masters mit dem Slave entspricht, ein Kanalverzögerungsprofil eines Funkübertragungskanals für die Richtfunkstrecke zwischen Master und Slave zu ermitteln. Andere Ausführungsformen sehen vor, alternativ oder ergänzend verfahrensbegleitend ermittelte Werte einer Fehlerrate oder eines verfahrensbegleitend ermittelten RSSI-Gradienten bei der Durchführung der Einstellung in der dritten Phase heranzuziehen.

Zusätzlich oder alternativ ist der Master-Senderempfänger in anderen Ausführungsformen ausgebildet, bei identifizierter und eingestellter Erstausrichtung vom Slave her eine Slave-Strahlrichtungsinformation zu empfangen und anhand der dann vorliegenden gültigen Slave-Strahlrichtungsinformation und einer eingestellten Master-Strahlrichtung des Masters rechnerisch zu ermitteln, ob die eingestellte Erstausrichtung einer direkten Sichtverbindung des Master-Senderempfängers mit dem Slave-Senderempfänger entspricht oder entsprechen könnte. Unter Umständen ergibt die bei dieser Ausführungsform vorgesehene geometrische Überprüfung nur eine Plausibilitätsinformation über das Vorliegen einer direkten Sichtverbindung, jedoch keine definitive Aussage.

Um trotz einer möglichen Übersteuerung eine Kommunikation aufbauen zu können, ist der Master vorzugsweise ausgebildet, in der ersten Phase bei einem Erfassen eines übersteuerten Signals die Zeitdauer dieses übersteuerten Signals zu messen, aus der Zeitdauer des übersteuerten Signals und einem Vergleich mit einer Soll-Zeitdauer eines erwarteten Antwortsignals auf den Empfang des erwarteten Antwortsignals zu schließen und eine als Reaktion auf den Empfang dieses erwarteten Antwortsignals vorgesehene Antwort zu senden.

Vorzugsweise ist der Master ausgebildet, in der ersten Phase, wenn er ein übersteuertes Antwortsignal empfängt, aus einer Empfangsleistung des Antwortsignals eine neue Sendeleistung des Suchsignals zu bestimmen, die niedriger ist als die zuvor verwendete, und anschließend das Suchsignal mit der neuen Sendeleistung zu senden. Beispielsweise ist der Master in einer ersten Variante dieser Ausführungsform ausgebildet, die Leistung des Eingangssignals am Ausgang des Eingangsverstärkers zu ermitteln. Bei dieser Variante kann nicht auf die absolute Höhe einer Übersteuerung geschlossen werden, so dass über bestimmte vordefinierte Abstufungen eine geeignete Leistung ermittelt werden muss. In einer alternativen zweiten Variante hat der Master zusätzlich ein Modul zur Leistungserkennung mit einem größeren Dynamikbereich als dem Dynamikbereich des Eingangsverstärkers, das parallel zum Eingangsverstärker geschaltet ist. Damit kann direkt auf die Empfangsleistung geschlossen werden und die entsprechende Anpassung errechnet werden. Dieser Prozess wird vorzugsweise iterativ durchgeführt, bis entweder ein nicht-übersteuerter Austausch von Suchsignal und Antwortsignal erfolgt oder ein Vorliegen eines Abbruchkriteriums ohne Empfang eines nicht-übersteuerten Signals festgestellt wird. Diese Ausführungsform des Masters ermöglicht es, die Kommunikation trotz eines übersteuerten Signals aufrechtzuerhalten. Zusätzlich ermöglicht sie die Sendeleistung anzupassen und so nicht nur eine optimierte Ausrichtung, sondern auch eine optimierte Sendeleistung zu ermöglichen.

Vorzugsweise ist der Master ausgebildet, nach Vorliegen des Abbruchkriteriums die erste Phase mit einer neuen Master-Strahlrichtung fortzuführen. Des Weiteren ist der Master vorzugsweise ausgebildet, nach einem nicht übersteuerten Austausch ein Startsignal zum Beginn der zweiten Phase auszusenden.

Gemäß einem dritten Aspekt betrifft die Erfindung ein Betriebsverfahren für einen Master-Senderempfänger einer Richtfunkstrecke, nachfolgend Master, mit einer Steuerungseinheit und einer Sende-Empfangseinheit mit mindestens einer Antenne, bei dem
- der Master im Austausch mit einem Slave-Senderempfänger, nachfolgend Slave, eine Abtastung zur Bestimmung einer wechselseitigen Erstausrichtung der mindestens einen Antenne durchführt, als welche zeitlich unmittelbar die erste der eingestellten wechselseitigen Ausrichtungen bestimmt wird, in der der Master mit dem Slave Signale austauschen kann,
- die bestimmte Erstausrichtung als eine Steuerungsstrahlrichtung des Masters, nachfolgend Master-Steuerungsstrahlrichtung, und als eine Steuerungsstrahlrichtung des Slaves, nachfolgend Slave-Steuerungsstrahlrichtung, festgelegt wird, anschließend
- weiter ermittelt wird, ob die eingestellte Erstausrichtung einer direkten Sichtverbindung des Masters mit dem Slave entspricht, anschließend
- entweder, nämlich im Falle, dass die eingestellte Erstausrichtung einer direkten Sichtverbindung entspricht, in eine dritte Phase gesprungen wird,
- oder, nämlich im Falle, dass die eingestellte Erstausrichtung einer direkten Sichtverbindung nicht entspricht,
in einer zweiten Phase
- über eine Anzahl von Iterationen in einer jeweiligen Iterationsschleife
   - der Master eine neue Slave-Strahlrichtung und eine Verweilzeit, in der der Slave in dieser neuen Slave-Strahlrichtung empfangen soll, dem Slave vorgibt,
   - der Master anschließend Suchsignale in eine vorbestimmte Anzahl seiner Master-Strahlrichtungen sendet, ohne eine Wartezeit in den Master-Strahlrichtungen zu verbleiben,
   - nach dem Ablauf der Verweilzeit der Master die Master-Steuerungsstrahlrichtung einstellt und vom Slave entweder Suchsignal-Empfangsdaten bezüglich der aus den Master-Strahlrichtungen empfangenen Suchsignale zur Signalqualitätsparameterbestimmung empfängt oder Ergebnisse einer beim Slave selbst durchgeführten Signalqualitätsparameterbestimmung bezüglich der aus den Master-Strahlrichtungen empfangenen Suchsignale empfängt,
   - weiterhin ermittelt wird, ob eine der in dieser Iterationsschleife getesteten Strahlkombinationen als Zweitausrichtung einer direkten Sichtverbindung entspricht, und wenn dies der Fall ist, in die dritte Phase gesprungen wird, und wenn dies nicht der Fall ist, die Iterationsschleife unter Vorgabe einer anderen Slave-Strahlrichtung erneut durchgeführt wird, und wobei
in der dritten Phase
- ausgehend von der Erstausrichtung oder der Zweitausrichtung eine vom Master gesteuerte Feinabtastung zur Bestimmung einer Feinausrichtung in einer vorbestimmten Ausrichtungsumgebung der Erstausrichtung oder der Zweitausrichtung durchgeführt wird, die eine nach vorbestimmten Signalqualitätskriterien beste Antennenausrichtung bildet, und danach die bestimmte beste Antennenausrichtung beim Master eingestellt wird. Das Betriebsverfahren teilt Vorteile und Ausführungsformen mit den oben beschriebenen Aspekten der Erfindung.

Gemäß einem vierten Aspekt betrifft die Erfindung einen Slave-Senderempfänger, nachfolgend Slave, zum Betrieb einer Richtfunkstrecke mit
einer Sende-Empfangseinheit, die ausgebildet ist, Signale zu erzeugen, in einstellbaren Richtungen über mindestens eine Antenne zu senden und zu empfangen und
einer Slave-Steuereinheit, die ausgebildet ist, zur automatischen Ausrichtung der mindestens einen Antenne
in einer ersten Phase
- die Sende-Empfangseinheit zur Durchführung einer Abtastung zur Bestimmung einer wechselseitigen Erstausrichtung mit einem Master-Senderempfänger, nachfolgend Master, anzusteuern, als welche zeitlich unmittelbar die erste der eingestellten wechselseitigen Ausrichtungen bestimmt wird, in der Master und Slave Signale miteinander austauschen können,
- die bestimmte Erstausrichtung als eine Steuerungsstrahlrichtung des Slaves, nachfolgend Slave-Steuerungsstrahlrichtung, festzulegen,
- zu ermitteln, ob die eingestellte Erstausrichtung einer direkten Sichtverbindung des Masters mit dem Slave entspricht,
- eine Steuerungsstrahlrichtung des Slaves, nachfolgend Slave-Steuerungsstrahlrichtung, zu ermitteln, anschließend
- entweder, nämlich im Falle, dass die eingestellte Erstausrichtung einer direkten Sichtverbindung entspricht, in eine dritte Phase zu springen,
- oder, nämlich im Falle, dass die eingestellte Erstausrichtung einer direkten Sichtverbindung nicht entspricht,
in einer zweiten Phase
- über eine Anzahl von Iterationen in einer jeweiligen Iterationsschleife
   - eine Vorgabe einer neuen Slave-Strahlrichtung und eine Verweilzeit, in der der Slave in dieser neuen Slave-Strahlrichtung empfangen soll, vom Master zu empfangen und einzustellen,
   - anschließend während der Verweilzeit vom Master in einer Anzahl von Master-Strahlrichtungen ausgesandte Suchsignale zu empfangen,
   - nach dem Ablauf der Verweilzeit die Slave-Steuerungsstrahlrichtung einzustellen und dem Master entweder Suchsignal-Empfangsdaten bezüglich der aus den Master-Strahlrichtungen empfangenen Suchsignale zur Signalqualitätsparameterbestimmung zu übermitteln oder dem Master Ergebnisse einer beim Slave selbst durchgeführten Signalqualitätsparameterbestimmung bezüglich der aus den Master-Strahlrichtungen empfangenen Suchsignale zu übermitteln,
   - weiterhin zu ermitteln, ob eine der in dieser Iterationsschleife getesteten Strahlkombinationen als Zweitausrichtung einer direkten Sichtverbindung entspricht, und wenn dies der Fall ist, in die dritte Phase zu springen, und wenn dies nicht der Fall ist, die Iterationsschleife nach Vorgabe einer anderen Slave-Strahlrichtung erneut durchzuführen, und
in der dritten Phase
- ausgehend von der Erstausrichtung oder der Zweitausrichtung eine Feinabtastung zur Bestimmung einer Feinausrichtung in einer vorbestimmten Ausrichtungsumgebung der Erstausrichtung oder der Zweitausrichtung zu steuern und durchzuführen, die eine nach vorbestimmten Signalqualitätskriterien beste Antennenausrichtung bildet, und danach die bestimmte beste Antennenausrichtung einzustellen.

Der Slave-Senderempfänger des vierten Aspekts der Erfindung ist geeignet, in einem Verfahren gemäß dem ersten Aspekt der Erfindung eingesetzt zu werden bzw. die auf den Slave-Senderempfänger bezogenen Teile des Verfahrens durchzuführen. Er wird hier auch kurz als Slave bezeichnet. Dies bedeutet jedoch nicht, dass der Senderempfänger im Sinne der Erfindung ausschließlich als Slave im Sinne der erfindungsgemäßen Verfahrensführung fungieren können muss. Eine solche ausschließliche Funktion ist lediglich als Ausführungsbeispiel zu verstehen. Bevorzugte Ausführungsbeispiele von erfindungsgemäßen Senderempfängern sind wie erwähnt ausgebildet, wahlweise als Master oder als Slave betrieben werden zu können.

Vorzugsweise ist der Slave ausgebildet, bei der Erstabtastung in der ersten Phase in einer ersten Slave-Strahlrichtung eine definierte Wartezeit, die größer ist als die Wartezeit eines Masters, auf den Empfang eines Suchsignals des Masters zu warten und bei Ausbleiben eines Suchsignals nach der Wartezeit zu einer zweiten Slave-Strahlrichtung zu wechseln sowie bei Empfang eines Suchsignals ein Antwortsignal in die erste Slave-Strahlrichtung zu senden.

In einer weiteren Ausführungsform ist der Slave ausgebildet, in der ersten Phase bei einem Erfassen eines übersteuerten Signals die Zeitdauer dieses übersteuerten Signals zu messen, aus der Zeitdauer des übersteuerten Signals und einem Vergleich mit einer Soll-Zeitdauer eines erwarteten Such- oder Antwortsignals auf den Empfang des erwarteten Such- oder Antwortsignals zu schließen und eine als Reaktion auf den Empfang dieses erwarteten Such- oder Antwortsignals vorgesehene Antwort zu senden.

Gemäß einem fünften Aspekt betrifft die Erfindung ein Betriebsverfahren für einen Slave-Senderempfänger, nachfolgend Slave, mit einer Steuerungseinheit und einer Sende-Empfangseinheit mit mindestens einer Antenne, bei dem
- der Slave mit dem Master anhand einer vorbestimmten Anzahl wechselseitiger Ausrichtungen eine Abtastung zur Bestimmung der Erstausrichtung durchführt, als welche zeitlich unmittelbar die erste der eingestellten wechselseitigen Ausrichtungen bestimmt wird, in der Master und Slave Signale miteinander austauschen können, und
- die bestimmte Erstausrichtung als eine Steuerungsstrahlrichtung des Slaves, nachfolgend Slave-Steuerungsstrahlrichtung, festgelegt wird, anschließend
- weiter ermittelt wird, ob die eingestellte Erstausrichtung einer direkten Sichtverbindung des Masters mit dem Slave entspricht, anschließend
- entweder, nämlich im Falle, dass die eingestellte Erstausrichtung einer direkten Sichtverbindung entspricht, in eine dritte Phase gesprungen wird,
- oder, nämlich im Falle, dass die eingestellte Erstausrichtung einer direkten Sichtverbindung nicht entspricht,
in einer zweiten Phase
- über eine Anzahl von Iterationen in einer jeweiligen Iterationsschleife
   - der Slave eine neue Slave-Strahlrichtung und eine Verweilzeit, in der der Slave in dieser neuen Slave-Strahlrichtung empfangen soll, vom Master vorgegeben bekommt und einstellt,
   - anschließend während der Verweilzeit vom Master in einer Anzahl von Master-Strahlrichtungen ausgesandte Suchsignale empfangen werden,
   - nach dem Ablauf der Verweilzeit die Slave-Steuerungsstrahlrichtung eingestellt wird und dem Master entweder Suchsignal-Empfangsdaten bezüglich der aus den Master-Strahlrichtungen empfangenen Suchsignale zur Signalqualitätsparameterbestimmung zu übermitteln und/oder dem Master Ergebnisse einer beim Slave selbst durchgeführten Signalqualitätsparameterbestimmung bezüglich der aus den Master-Strahlrichtungen empfangenen Suchsignale übermittelt werden,
   - weiterhin ermittelt wird, ob eine der in dieser Iterationsschleife getesteten Strahlkombinationen als Zweitausrichtung einer direkten Sichtverbindung entspricht, und wenn dies der Fall ist, in die dritte Phase gesprungen wird, und wenn dies nicht der Fall ist, die Iterationsschleife unter Vorgabe einer anderen Slave-Strahlrichtung erneut durchgeführt wird, und wobei
in der dritten Phase
- ausgehend von der Erstausrichtung oder der Zweitausrichtung eine Feinabtastung zur Bestimmung einer Feinausrichtung in einer vorbestimmten Ausrichtungsumgebung der Erstausrichtung oder der Zweitausrichtung durchgeführt wird, die eine nach vorbestimmten Signalqualitätskriterien beste Antennenausrichtung bildet, und danach die bestimmte beste Antennenausrichtung beim Slave eingestellt wird.

Gemäß einem sechsten Aspekt betrifft die Erfindung eine Richtfunkanordnung aufweisend einen Master gemäß dem zweiten Aspekt der Erfindung oder einer seiner Ausführungsformen sowie mindestens einen Slave gemäß dem vierten Aspekt der Erfindung oder einer seiner Ausführungsformen.

Die Ausrichtung der Antennen in den erfindungsgemäßen Verfahren und Vorrichtungen kann wie bereits erwähnt sowohl über eine motorgestützte mechanische Verstellung erfolgen als auch über ein sogenanntes Beamsteering-Verfahren. Beim Beamsteering-Verfahren erfolgt die Ausrichtung der Antenne über eine Amplituden- und/oder Phasensteuerung. Antennen für Beamsteering-Verfahren bestehen in der Regel aus mehreren Elementen. Unter Beamsteering-Verfahren wird im Rahmen dieser Erfindung ein elektronisches Verfahren zur Antennenausrichtung verstanden, bei dem für jedes Antennenelement oder für eine Gruppe von Antennenelementen eine getrennte Beeinflussung der Signalamplitude oder der Signalphase oder der Signalamplitude und der Signalphase stattfindet. Dementsprechend hat der Master oder der Slave in einer jeweiligen Ausführungsform eine mechanisch verstellbare Antenne, eine Antennenausrichtungsansteuerung, ein motorgestütztes System zur Ausrichtung der Antenne und ein drahtloses Kommunikationsgerät zum Anschluss an die Antenne. In einer Alternative wird dagegen eine Antenne aus mehreren Elementen in Verbindung mit einer elektronischen Phasen- und/oder Amplitudensteuerung des Signals für jedes Element zur Steuerung der Strahlrichtung verwendet.

Die vorstehend beschriebenen erfindungsgemäßen Vorrichtungen und Betriebsverfahren gemäß des zweiten bis fünften Aspektes der Erfindung teilen die Vorteile des Verfahrens des ersten Aspekts der Erfindung.

Nachfolgend werden mit Bezug auf Figuren weitere Ausführungsbeispiele erläutert, wobei
- Figur 1: schematisch ein Ablaufdiagramm einer Ausführungsform eines Verfahrens gemäß dem ersten Aspekt der Erfindung zeigt,
- Figur 2: schematisch eine Ausführungsform einer Richtfunkanordnung gemäß dem sechsten Aspekt der Erfindung zeigt,
- Figur 3: schematisch eine Ausführungsform eines Betriebsverfahrens für einen Master-Senderempfänger gemäß dem dritten Aspekt der Erfindung zeigt,
- Figur 4: schematisch eine Ausführungsform eines Betriebsverfahrens für einen Slave-Senderempfänger gemäß dem fünften Aspekt der Erfindung zeigt.

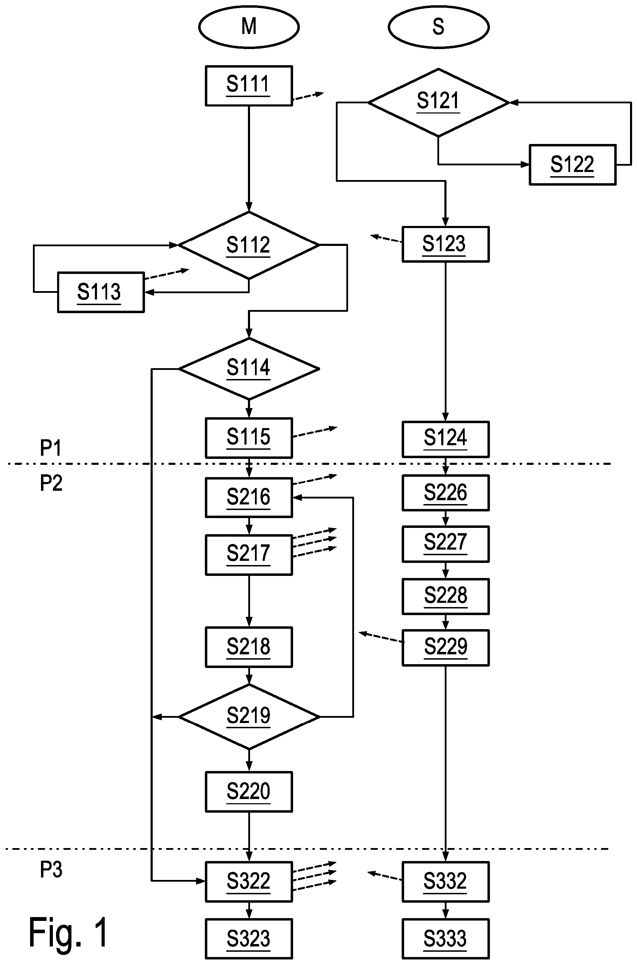

Figur 1 zeigt in Form eines Flussdiagramms schematisch eine Ausführungsform eines Verfahrens zur automatischen Ausrichtung von Antennen von Stationen einer Richtfunkstrecke gemäß dem ersten Aspekt der Erfindung.

Das Verfahren zur automatischen Ausrichtung von Antennen zweier Stationen M und S einer Richtfunkstrecke gemäß dem ersten Aspekt der Erfindung ist ein Prozess mit zwei Phasen P1, P3 oder drei Phasen P1, P2, P3, je nach den Gegebenheiten, wie nachfolgend erläutert wird. Im Flussdiagramm der Fig. 1 sind Verfahrensschritte, die eine erste Station in Form eines Master-Senderempfängers M ausführt, auf der linken Seite dargestellt. Verfahrensschritte, die eine zweite Station in Form eines Slave-Senderempfängers S ausführt, sind auf der rechten Seite dargestellt.

In einer ersten Phase erfolgt eine Beamsuche, anders ausgedrückt eine Erstabtastung, zur Bestimmung einer wechselseitigen Erstausrichtung der Antennen der beiden Stationen M und S. Der Master-Senderempfänger, kurz Master M, scannt in der ersten Phase schnell über eine vorbestimmte Anzahl seiner Master-Strahlrichtungen. Hierzu wählt er eine Master-Strahlrichtung aus und sendet in diese ein Discover-Paket (Schritt S111), was in Fig. 1 durch einen vom Verfahrensschritt S111 ausgehenden gestrichelten horizontalen Pfeil symbolisiert ist. Anschließend wartet der Master M in Schritt S112 während einer vorbestimmten Wartezeit auf ein Antwortsignal. Empfängt der Master M während der Wartezeit kein Antwortsignal, setzt er seine Suche mit Schritt S113 fort, indem er auf eine nächste Master-Strahlrichtung umschaltet, wie im Schritt S111 ein Discover-Paket sendet und anschließend zum Schritt S112 zurückverzweigt und erneut auf ein Antwortsignal wartet.

Der Slave-Senderempfänger, kurz Slave S, scannt in der ersten Phase seinerseits über eine vorbestimmte Anzahl seiner Slave-Strahlrichtungen. Die Scangeschwindigkeit des Slaves S ist in der vorliegenden Ausführungsform langsamer als die Scangeschwindigkeit des Masters M. In einer alternativen Variante ist die Scangeschwindigkeit S des Slaves größer als die Scangeschwindigkeit des Masters M. Der Slave S wartet in jeder der eingestellten Slave-Strahlrichtungen auf den Empfang eines vom Master M ausgesendeten DISCOVER-Paketes (Schritt S121). Empfängt der Slave S während seiner Wartezeit ein solches DISCOVER-Paket nicht, so setzt er seinen Scan in einer nächsten Slave-Strahlrichtung in Schritt S122 fort. In S122 wird die nächste Slave-Strahlrichtung bestimmt und eingestellt, dann wird in S121 wieder gewartet. Empfängt der Slave S während der Wartezeit ein DISCOVER-Paket, so antwortet er in Schritt S123 dem Master M mit einem HEREIAM-Paket. Dieses HEREIAM-Paket enthält unter anderem eine Bewertung einer Empfangssignalqualität des DISCOVER-Paketes (z. B. RSSI) und eine gewählte Senderichtung. Wird dem Master M die gewählte Senderichtung vom Slave S übermittelt, so ist es ihm möglich, die aktuelle Position des Slave S im Scan-Algorithmus zu bestimmen.

Es sei erwähnt, dass die verwendeten Namen der Pakettypen nur als Beispiel dienen. Auch andere Namen können selbstverständlich verwendet werden. Neben der Verwendung von DISCOVER- und HEREIAM-Pakettypen liegt auch die Verwendung anderer Pakettypen im Rahmen der Erfindung. Auch können die Pakete zusätzlich andere Funktionen haben oder zusätzlich andere Parameter enthalten. Es müssen auch keine Pakete übermittelt werden. Vielmehr können alternativ andere, insbesondere einfacher strukturierte, vorbestimmte digitale oder analoge Signale verwendet werden, um die Funktion der genannten Pakete zu erfüllen.

Hat der Master M vom Slave S ein HEREIAM-Paket in Schritt S112 erhalten, ermittelt der Master M im Schritt S114, ob die in der ersten Phase bestimmte Erstausrichtung einer direkten Sichtverbindung des Masters mit dem Slave entspricht. Hierzu wird ein Kanalverzögerungsprofil des Funkübertragungskanals für die in der ersten Phase mit der Erstausrichtung hergestellte Richtfunkstrecke zwischen Master und Slave ermittelt, indem die Kanalimpulsantwort oder Kanalmatrix gemessen und ausgewertet wird. Anhand des Kanalverzögerungsprofils bestimmt der Master, ob die direkte Sichtverbindung ("line of sight"; LOS) vorliegt oder nicht. Alternativ oder zusätzlich wird in einer Variante für ein zwischen Master und Slave ausgetauschtes Signal (bei bekannter Verarbeitungsdauer) ein Round-Trip-Time-of-Flight gemessen und damit die Entfernung bestimmt. Dieser Wert kann anschließend in Bezug zu einer Signalstärke RSSI gesetzt werden. Beide Möglichkeiten erlauben sowohl für sich genommen als auch bei kombinierter Durchführung eine Bewertung, ob eine direkte Sichtverbindung (LOS) vorliegt oder nicht (NLOS).

Liegt keine direkte Sichtverbindung (Fall NLOS) vor, so sendet der Master M in Schritt S115 ein Signal zur Einleitung einer zweiten Phase P2 an den Slave S. Dieses Signal enthält ein Steuerungspaket, mit dem die in der ersten Phase P1 ermittelte Erstausrichtung als eine Steuerungsstrahlrichtung des Masters M, nachfolgend Master-Steuerungsstrahlrichtung, und eine Steuerungsstrahlrichtung des Slaves S, nachfolgend Slave-Steuerungsstrahlrichtung, bestimmt werden. Ergänzend können weitere Informationen über ein umfangreicheres Handshake-Protokoll zwischen Master und Slave ausgetauscht werden.

Mit dem Empfang des Signals zur Einleitung der zweiten Phase in Schritt S124 schaltet auch der Slave in die zweite Phase P2 um.

In der zweiten Phase P2 erfolgt eine durch den Master M gesteuerte schnelle iterative Suche weiterer Verbindungsmöglichkeiten in den verbliebenen Strahlkombinationsmöglichkeiten. Hierzu gibt der Master M dem Slave S zu Beginn einer Iteration in einem Schritt S216 zusätzlich zur bereits übermittelten Slave-Steuerungsstrahlrichtung eine bis jetzt noch nicht getestete Slave-Strahlrichtung und eine Verweilzeit vor, in der der Slave S in dieser Slave-Strahlrichtung auf Empfang verweilen soll. In Schritt S226 empfängt der Slave S die Informationen des Masters M und stellt die vorgegebene Slave-Strahlrichtung ein. In Schritt S227 verweilt der Slave daraufhin in der angegebenen Slave-Strahlrichtung auf Empfang, bis die Verweilzeit abgelaufen ist. In Schritt S217 sendet der Master währenddessen DISCOVER-Pakete in eine vorbestimmte Anzahl seiner Master-Strahlrichtungen, ohne auf Antwort zu warten. Damit beschleunigt sich der Durchlauf zum Testen der Strahlkombinationsmöglichkeiten erheblich. Der Slave S ermittelt und speichert, vorzugsweise während der Verweilzeit des Schritts S227, in einem Schritt S228 Parameter der während der Verweilzeit empfangenen Pakete, wie z. B. die verwendete Strahlrichtung des Masters und Parameter zur Signalqualitätsbewertung, wie z. B. einen Indikator für die Empfangsleistung, wie z. B. den RSSI-Wert (Received Signal Strength Indicator). Der Slave S stellt nach der Verweilzeit die Slave-Steuerungsstrahlrichtung ein (S229) und übermittelt nun dem Master M die zwischenzeitlich (in S228) ermittelten Parameter der empfangenen Pakete sowie die Parameter zur Signalqualitätsbewertung. Der Master M stellt nach Durchlauf über die vorbestimmte Anzahl von Master-Strahlrichtungen in Schritt S218 die Master-Steuerungsstrahlrichtung ein und empfängt die vom Slave S im Schritt S229 ausgesandten Parameter.

Anschließend prüft der Master in jeder Iterationsschleife in S219, ob es sich um eine LOS-Verbindung handelt. Wenn dies der Fall ist, wird direkt aus diesem Iterationsdurchlauf in die Phase P3 gesprungen (siehe unten). Wenn dies nicht der Fall ist, wird geprüft, ob bereits eine vorbestimmte Anzahl von Strahlkombinationen getestet wurde. Wenn nicht, kann eine neue Strahlrichtung für die Steuerung übermittelt werden. Jedenfalls verzweigt der Master in diesem Fall, dass also die vorbestimmte Anzahl von Kombinationen noch nicht getestet wurde, zurück zum Schritt 216, um die Evaluierung mit einer neuen Slave-Strahlrichtung iterativ fortzusetzen. Nachdem die vorbestimmte Anzahl der Strahlkombinationen getestet wurde, wertet der Master M im Schritt S220 die vom Slave S empfangenen Parameter aus und bestimmt anhand dessen eine optimale Ausrichtung von Slave und Master. Optimale Ausrichtung bedeutet hier die Gewährleistung der im Rahmen der zweiten Phase durchgeführten Ermittlung der bestmöglichen Signalqualität, wobei die Signalqualität beispielsweise mit der Empfangssignalstärke bewertet wird. In einer anderen Ausführungsform des Verfahrens wird alternativ oder zusätzlich ein Maß für die Fehlerfreiheit des empfangenen Signals, zum Beispiel eine Bitfehlerrate herangezogen. Unabhängig vom Ergebnis, wird das Verfahren in der dritten Phase P3 fortgesetzt.

In die dritte Phase P3 wird ausgehend vom Schritt S114 auch dann gesprungen, wenn schon in der ersten Phase P1 eine direkte Sichtverbindung hergestellt wurde und auch, wenn in einer Iteration von P2 ausgehend von Schritt S219 eine solche gefunden wurde. Es ist nicht zwingend notwendig, eine feingranularere Ausrichtung gemäß der dritten Phase vorzunehmen. Es könnte weiterhin auch der Fall vorliegen, dass nach der zweiten Phase eine (demzufolge optimale) NLOS-Verbindung besteht, dann kann in einer dritten Phase auch mit einer feineren Abtastung optimiert werden, muss aber nicht.

In der dritten Phase P3 wird mit Schritt S322 masterseitig und S332 slaveseitig eine graduelle Suche in den benachbarten Strahlpositionen vorgenommen. Diese kann entweder in Richtung des RSSI-Gradienten erfolgen, oder auch rein zufällig durch geringfügige Auslenkung des Strahls von Master M und Slave S um die gefundene Position herum. Auch diese graduelle Suche wird vom Master gesteuert, wie im Zusammenhang mit den Schritten S217, S227 beschrieben und somit beschleunigt durchgeführt.

Mit dem Abschluss dieser graduellen Suche in der Phase P3 endet die Verfahrensführung bei Master M und Slave S mit der Einstellung der ermittelten besten Ausrichtung (S323, S333).

Sofern im Verlauf des Verfahrens ein Austausch zwischen dem Master M und dem Slave S fehlschlägt oder bei der Rückkehr in die vorbestimmte Steuerungsstrahlrichtung ein Timeout auftritt, d. h. innerhalb einer spezifizierten Verweilzeit kein Paket der jeweils anderen Station eintrifft, so verzweigt in einer hier nicht dargestellten Ausführungsform die Station nach erfolglosem Ablauf der Verweilzeit selbstständig an den Beginn der ersten Phase P1 zurück. Dabei wählt sie abweichend von einem vollständigen Neustart der Verfahrensführung jedoch vorteilhafterweise eine Strahlrichtung, die der zuletzt verwendeten Strahlrichtung oder einer der zuletzt verwendeten benachbarten und zuvor bereits erfolgreich getesteten Strahlrichtungen entspricht. Mit dieser Vorgehensweise kann gewährleistet werden, dass die Verbindungssuche erneut mit einer Strahlrichtung beginnt, in deren Nähe bereits eine Verbindung möglich war. Auch dies führt zu einer Beschleunigung des Verfahrens, beispielsweise im Vergleich zu einem Neustart mit der Erstausrichtung.

In einer anderen in den Figuren nicht dargestellten Abwandlung des Verfahrens der Fig. 1 sendet der Master M zu Beginn der ersten Phase mit seiner maximalen Sendeleistung, um auch solche Stationen erreichen zu können, die in einer großen Entfernung zu ihm liegen. Tritt aufgrund der maximalen Sendeleistung des Masters eine Übersteuerung des Empfangsverstärkers des Slaves auf, so kann das eingehende Paket im Allgemeinen nicht fehlerfrei dekodiert werden. Im Stand der Technik sind dann keine Auswertung der enthaltenen Information und keine Handshake-Durchführung mehr möglich. In der vorliegenden Abwandlung des Verfahrens wird trotz der Übersteuerung ein Verbindungsaufbau durchgeführt, indem beide Stationen beim Empfang eines übersteuerten Signals eine Zeitmessung des eingehenden Signals durchführen. Wird ein übersteuertes Signal empfangen, so ist die Empfangsleistung während des Paketempfangs am oder in der Nähe des Maximalpegels. Durch die Messung der Dauer der Übersteuerung und durch den Vergleich der Zeitdauer des übersteuerten Signals mit einer Soll-Zeitdauer eines erwarteten Signals kann die empfangende Station, z. B. der Slave, bestimmen, dass es sich vermutlich z. B. um ein DISCOVER-Paket handelt. Kann der Slave also auf den Empfang eines DISCOVER-Paketes schließen, so wird er daraufhin seinerseits ein HEREIAM-Paket senden. In einer Variante dieses Verfahrens geht auch dieses HEREIAM-Paket übersteuert beim Master ein. Der Master kann dann seinerseits eine Zeitmessung des übersteuerten Signals sowie einen Vergleich mit der Soll-Zeitdauer eines erwarteten Signals durchführen und somit auf den Empfang eines HEREIAM-Paketes schließen. Darüber hinaus kann der Master eine neue Sendeleistung bestimmen, die gegenüber der bisherigen Sendeleistung reduziert ist und mit dieser reduzierten Sendeleistung ein weiteres DISCOVER-Paket senden. Darüber hinaus kann beim Senden eines Paketes als Reaktion auf ein übersteuertes Paket die jeweilige Station ihre Wartezeit im aktuellen Zyklus entsprechend anpassen, d. h. die Station verlängert ihre Wartezeit um eine vorab definierte Zeitspanne.

Dieser Prozess wird so lange iterativ wiederholt, bis entweder durch die sukzessive Leistungsverringerung ein fehlerfreier Austausch von DISCOVER- und HEREIAM-Paketen möglich ist oder bis ein Timeout abläuft, da kein Paket mehr eintrifft. Im letzteren Fall fahren die beiden Stationen mit der ersten Phase des Verfahrens fort. Im ersteren sendet der Master das Signal zur Einleitung der zweiten Phase. Kann der Slave dieses dekodieren, so läuft das Verfahren wie oben beschrieben in der zweiten Phase weiter. Hat jedoch der Master nach dem fehlerfreien Austausch von DISCOVER- und HEREIAM-Paket dem Slave ein Signal gesendet, dass dieser nicht dekodieren kann, so setzt der Slave seine Slave-Strahlrichtung um eine Position zurück und verbleibt in der ersten Phase, d. h. er speichert keine Parameter eingehender Signale und übersendet auch nichts an den Master. Der Master bemerkt dann nach der ersten Iteration der zweiten Phase, dass er in der Master-Steuerungsstrahlrichtung kein Signal des Slaves empfängt. Daraufhin setzt er seine Sendeleistung wieder auf das Maximum und beginnt erneut mit der ersten Phase.

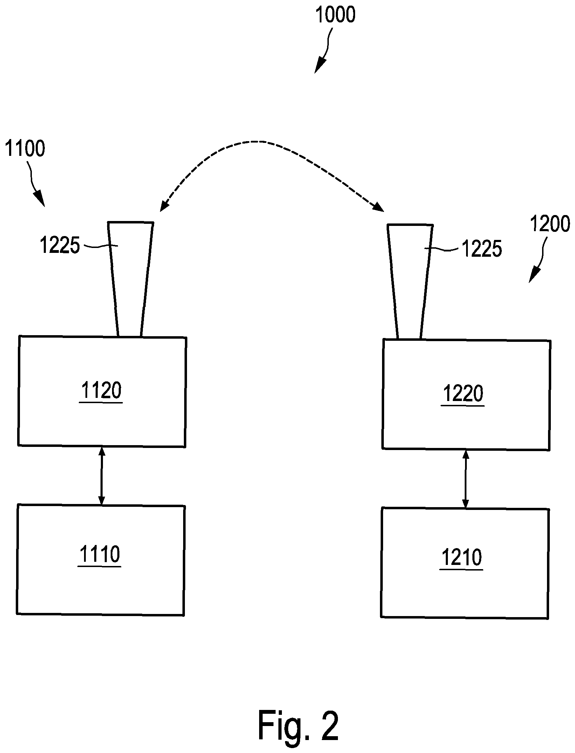

Fig. 2 zeigt schematisch eine Ausführungsform einer Richtfunkanordnung 1000 gemäß dem oben beschriebenen sechsten Aspekt der Erfindung mit einem Master-Senderempfänger (Master) 1100 gemäß dem oben beschriebenen zweiten Aspekt der Erfindung und einem Slave-Senderempfänger (Slave) 1200 gemäß dem oben beschriebenen dritten Aspekt der Erfindung.

Der Master 1100 weist eine Master-Steuerungseinheit 1110 sowie eine Sende-Empfangseinheit 1120 mit einer Antenne 1125 auf. Die Sende-Empfangseinheit 1120 ist ausgebildet, in einstellbaren Richtungen über die Antenne 1125 Signale zu erzeugen, zu senden und zu empfangen. Die Master-Steuereinheit 1110 ist ausgebildet, zur automatischen Ausrichtung der Antenne 1125 die Sende-Empfangseinheit 1120 zur Durchführung einer Erstabtastung zur Bestimmung einer wechselseitigen Erstausrichtung mit dem Slave-Senderempfänger 1200 anzusteuern. Darüber hinaus ist die Master-Steuereinheit 1110 ausgebildet, zu ermitteln, ob eine eingestellte Erstausrichtung einer direkten Sichtverbindung des Masters 1100 mit dem Slave 1200 entspricht, und falls dies nicht der Fall ist, eine Steuerungsstrahlrichtung des Masters, nachfolgend Master-Steuerungsstrahlrichtung, sowie optional zusätzlich eine Steuerungsstrahlrichtung des Slaves, nachfolgend Slave-Steuerungsstrahlrichtung, zu ermitteln. In diesem Fall, dass die eingestellte Erstausrichtung einer direkten Sichtverbindung nicht entspricht, leitet die Master-Steuereinheit 1110 eine zweite Phase der automatischen Ausrichtung ein. Im Falle, dass die eingestellte Erstausrichtung einer direkten Sichtverbindung entspricht, wird dagegen in eine dritte Phase gesprungen.

In der zweiten Phase wird der Sende-Empfangseinheit 1120 sowie dem Slave 1200 eine jeweilige Steuerungsstrahlrichtung vorgegeben, und anschließend über eine Anzahl von Iterationen jeweils eine Zweitausrichtung bestimmt, und in einer jeweiligen Iterationsschleife für den Slave und eine Verweilzeit, in der der Slave in dieser Slave-Strahlrichtung empfangen soll, vorgegeben. Weiterhin steuert die Master-Steuereinheit 1110 die Sende-Empfangseinheit 1120 zum Aussenden von Suchsignalen in eine vorbestimmte Anzahl von Master-Strahlrichtungen an.

Außerdem ist die Master-Steuereinheit 1110 ausgebildet, nach dem Ablauf der Verweilzeit die Sende-Empfangseinheit 1120 auf die Master-Steuerungsstrahlrichtung einzustellen und vom Slave 1200 entweder Suchsignal-Empfangsdaten bezüglich der aus den Master-Strahlrichtungen empfangenen Suchsignale zur Signalqualitätsparameterbestimmung zu empfangen oder Ergebnisse einer beim Slave 1200 selbst durchgeführten Signalqualitätsparameterbestimmung bezüglich der aus den Master-Strahlrichtungen empfangenen Suchsignale zu empfangen.

Weiterhin ist die Master-Steuereinheit ausgebildet zu ermitteln, ob eine der in dieser Iterationsschleife getesteten Strahlkombinationen als Zweitausrichtung einer direkten Sichtverbindung entspricht, und wenn dies der Fall ist, in die dritte Phase zu springen, und wenn dies nicht der Fall ist, die Iterationsschleife unter Vorgabe einer anderen Slave-Strahlrichtung erneut durchzuführen,

In der dritten Phase wird ausgehend von der Erstausrichtung oder der Zweitausrichtung eine Feinabtastung zur Bestimmung einer Feinausrichtung in einer vorbestimmten Ausrichtungsumgebung der Erstausrichtung oder der Zweitausrichtung gesteuert und durchgeführt, die eine nach vorbestimmten Signalqualitätskriterien beste Antennenausrichtung bildet, und danach die bestimmte beste Antennenausrichtung eingestellt.

Die Antenne 1125 des Masters 1100 ist beispielsweise als mechanisch verstellbare Antenne ausgebildet. Die Sende-Empfangseinheit 1120 kann hierfür über ein motorgestütztes System verfügen, das von der Steuerungseinheit 1110 angesteuert wird und die Antenne 1125 mechanisch verstellt. In einer anderen Ausführungsform ist die Antenne 1125 aus mehreren Elementen aufgebaut und wird durch eine elektronische Phasen- und/oder Amplitudensteuerung des Signals für jedes Element auf eine bestimmte Strahlrichtung eingestellt.

Der Slave 1200 weist eine Slave-Steuereinheit 1210 sowie eine Senderempfangseinheit 1220 mit einer Antenne 1225 auf. Die Sende-Empfangseinheit 1220 des Slaves 1200 ist ausgebildet, Signale zu erzeugen, in einstellbaren Richtungen über die Antenne 1225 zu senden und zu empfangen. Die Slave-Steuereinheit 1210 ist ausgebildet, zur automatischen Ausrichtung der Antenne 1225 die Sende-Empfangseinheit 1220 in einer ersten Phase zur Durchführung einer Abtastung zur Bestimmung einer wechselseitigen Erstausrichtung mit dem Master-Senderempfänger 1100 anzusteuern, und zu ermitteln, ob die eingestellte Erstausrichtung einer direkten Sichtverbindung des Masters mit dem Slave entspricht, und falls dies nicht der Fall ist, eine Steuerungsstrahlrichtung des Slaves, nachfolgend Slave-Steuerungsstrahlrichtung, zu ermitteln,

Im Fall, dass die eingestellte Erstausrichtung einer direkten Sichtverbindung nicht entspricht, springt die Slave-Steuereinheit 1210 in eine zweite Phase der automatischen Ausrichtung. Im Falle, dass die eingestellte Erstausrichtung einer direkten Sichtverbindung entspricht, wird dagegen in eine dritte Phase gesprungen,

Die Slave-Steuereinheit 1210 steuert in der zweiten Phase über eine Anzahl von Iterationen jeweils nach Vorgabe durch den Master 1100 die Sende-Empfangseinheit 1220 zur Einstellung einer neuen Slave-Strahlrichtung und einer Verweilzeit, in der die Sende-Empfangseinheit 1220 in dieser neuen Slave-Strahlrichtung empfangen soll.

Anschließend werden während der Verweilzeit vom Master in einer Anzahl von Master-Strahlrichtungen ausgesandte Suchsignale empfangen.

Nach dem Ablauf der Verweilzeit steuert die Slave-Steuereinheit 1210 die Sende-Empfangseinheit 1220 an, um die Slave-Steuerungsstrahlrichtung einzustellen und dem Master 1100 entweder Suchsignal-Empfangsdaten bezüglich der aus den Master-Strahlrichtungen empfangenen Suchsignale zur Signalqualitätsparameterbestimmung zu übermitteln oder dem Master Ergebnisse einer beim Slave selbst durchgeführten Signalqualitätsparameterbestimmung bezüglich der aus den Master-Strahlrichtungen empfangenen Suchsignale zu übermitteln.

Weiterhin wird ermittelt, ob eine der in dieser Iterationsschleife getesteten Strahlkombinationen als Zweitausrichtung einer direkten Sichtverbindung entspricht, und wenn dies der Fall ist, in die dritte Phase gesprungen, und wenn dies nicht der Fall ist, die Iterationsschleife nach Vorgabe einer anderen Slave-Strahlrichtung erneut durchgeführt.

In der dritten Phase wird ausgehend von der Erstausrichtung oder der Zweitausrichtung eine Feinabtastung zur Bestimmung einer Feinausrichtung in einer vorbestimmten Ausrichtungsumgebung der Erstausrichtung oder der Zweitausrichtung gesteuert und durchgeführt, die eine nach vorbestimmten Signalqualitätskriterien beste Antennenausrichtung bildet, und danach wird die bestimmte beste Antennenausrichtung eingestellt.

Mit der dargestellten Richtfunkanordnung 1000 kann damit eine Richtfunkstrecke automatisch und schnell aufgebaut werden.

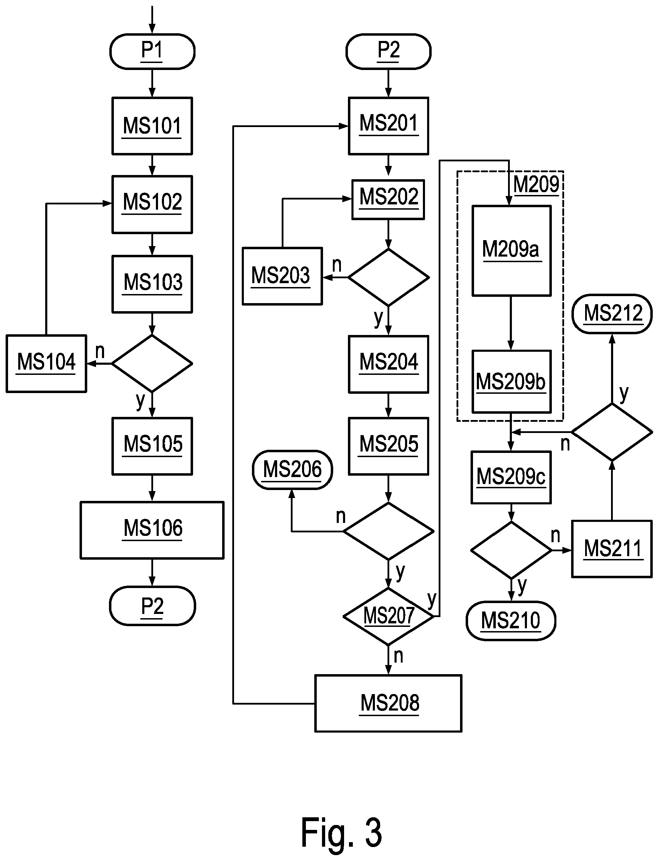

Figur 3 zeigt schematisch eine Ausführungsform eines Betriebsverfahrens für einen Master-Senderempfänger gemäß dem dritten Aspekt der Erfindung. Das Betriebsverfahren beginnt mit dem Beginn einer ersten Phase P1, in der der Master in Schritt MS101 in einer ersten Master-Strahlrichtung initialisiert wird. Danach sendet der Master in Schritt MS102 ein DISCOVER-Paket und wartet in Schritt MS103 eine vorbestimmte Wartezeit auf ein Antwortsignal. Hat der Master während der Wartezeit kein Signal erhalten (n), so setzt er Phase P1 mit Schritt MS104 fort, indem er sich in eine neue Master-Strahlrichtung ausrichtet und mit Schritt MS102 fortfährt. Hat der Master während der Wartezeit eine Antwort erhalten (y), so kann er optional in Schritt MS105 seine Master-Strahlrichtung sowie Ergebnisse einer Signalqualitätsparameterbestimmung (z.B. RSSI) speichern.

In Schritt MS106 sendet der Master an den Slave, von dem er das Antwortsignal erhalten hat, ein Startsignal zum Start einer zweiten Phase P2. Optional kann der Master in Schritt MS106 mit dem Startsignal für die zweite oder dritte Phase an den Slave eine Slave-Steuerungsstrahlrichtung sowie eine neue Slave-Strahlrichtung für den Slave und eine Verweilzeit, in der der Slave in dieser Slave-Strahlrichtung in Phase P2 empfangen soll, an den Slave übersenden. Dies kann aber auch in einem gesonderten Austausch nach der Übersendung des Startsignals für die zweite Phase geschehen. Mit Schritt MS 106 wird zusätzlich ermittelt, ob die in der ersten Phase eingestellte Erstausrichtung eine direkte Sichtverbindung ("LOS") ist. Wie bereits erläutert, kann hierfür das Verzögerungsprofil des Übertragungskanals ermittelt und ausgewertet werden. Eine andere Möglichkeit, die an Stelle oder zusätzlich zu dieser Charakterisierung genutzt werden kann, ist eine Plausibilitätsprüfung anhand geometrischer Überlegungen. Dazu übermittelt die Slave-Station dem Master bei der Verbindungsinitialisierung den gewählten Abstrahlungswinkel. Werden bei der Montage beide Stationen in der vertikalen gleich ausgerichtet, d.h. "oben" und "unten" ist zwischen Master und Slave definiert, kann daraus gefolgert werden, dass bei der Wahl eines Antennenstrahls nach "unten" bei beiden Stationen keine direkte Sichtverbindung vorliegt. Werden in den Geräten Ein- oder Mehrachsen-Kompasse eingebaut, ist keine Vorgabe der Montageausrichtung notwendig. Stattdessen übermittelt der Slave zusätzlich zum Abstrahlungswinkel auch seine Kompassinformationen. Ein solcher Plausibilitätstest ist nicht auf Kompass- / Ausrichtungsinformationen beschränkt, er kann auch anhand von Signallaufzeitmessungen und/oder RSSI-Bestimmungen erfolgen, optional unterstützt durch GPS-Informationen.

Ergibt sich als Ergebnis ein Empfang über eine direkte Sichtverbindung, wird in einer dritten Phase P3 nur noch eine graduelle Suche in den benachbarten Strahlpositionen vorgenommen (in Fig. 3 nicht dargestellt). Diese kann entweder in Richtung des RSSI-Gradienten erfolgen, oder auch rein zufällig durch geringfügige Auslenkung des Strahls von Master und Slave um die gefundene Position herum. Diese graduelle Suche wird vom Master gesteuert und erfolgt somit im Vergleich mit bekannten Verfahren beschleunigt.

Ergibt sich als Ergebnis ein Empfang über keine direkte Sichtverbindung, wird in der zweiten Phase P2 anschließend wie folgt verfahren. Der Master wird in Schritt MS201 wiederum auf einer ersten Strahlposition initialisiert. In Schritt MS202 sendet er ein DISCOVER-Paket in diese Master-Strahlrichtung. Nach dem Senden des DISCOVER-Paketes verweilt der Master nicht in der ersten Master-Strahlrichtung, um eine Antwort abzuwarten, sondern richtet sich in eine nächste Master-Strahlrichtung in Schritt MS203 aus, sofern er noch nicht eine vorbestimmte Anzahl von Master-Strahlrichtungen verwendet hat (n). Hat der Master alle vorgegebenen Master-Strahlrichtungen durchlaufen (y), so richtet er sich auf eine zuvor von ihm bestimmte Master-Steuerungsstrahlrichtung aus (MS204). Optional sendet der Master in Schritt MS205 ein Abfragepaket an den Slave zur Übermittlung von Ergebnissen einer Signalqualitätsparameterbestimmung des Slaves. Der Master kann aber auch schlicht auf den Empfang eines Paketes vom Slave, das diese Information beinhaltet, warten. Hat der Master vom Slave die Information nicht erhalten (n), startet der Master Phase 1 mit Schritt MS206 neu.

Hat der Master vom Slave die Information erhalten (y), startet der Master eine Abfrage in Schritt MS207, ob eine vorbestimmte Anzahl von Strahlkombinationen getestet wurde. Ist dies nicht der Fall (n), so sendet der Master in Schritt MS208 eine Slave-Steuerungsstrahlrichtung sowie eine neue Slave-Strahlrichtung und eine Verweilzeit, in der der Slave an dieser Slave-Strahlrichtung verweilen soll, an den Slave und beginnt damit die Iteration wieder bei Schritt MS201. Sind alle vorbestimmten Strahlkombinationen getestet (y), so wertet der Master die vom Slave übermittelten Ergebnisse der Signalqualitätsparameterbestimmung in Schritt MS209 aus. Hierzu kann der Master in einem Schritt MS209a die getesteten Strahlkombinationen zunächst anhand der Ergebnisse der Signalqualitätsparameterbestimmung (z.B. RSSI) sortieren und an den Slave ausgewählte Slave-Strahlrichtungen mit einer Information zur Priorität der jeweiligen Strahlrichtung senden.

In Schritt MS209b kann der Master dann im Austausch mit dem Slave die ausgewählten Strahlkombinationen iterativ und mit einer bidirektionalen Messung weiterer Signalqualitätsparameter, z.B. der Bitfehlerrate oder der Paketfehlerrate, evaluieren. Vorteilhaft geschieht die Evaluation der Bit-/Paketfehlerrate mit ca. 1000 Paketen je Strahlrichtung. In Schritt MS209c kann der Master dann aus der Evaluierung die optimale Strahlkombination auswählen und diese mit einem Handshake-Protokoll an den Slave übermitteln. War der Handshake erfolgreich (y), so werden die Antennen entsprechend ausgerichtet und das Verfahren ist damit abgeschlossen (MS210). War der Handshake nicht erfolgreich (n), so wird in Schritt MS211 die Master-Strahlrichtung verworfen und falls keine weiteren geeigneten Strahlkombinationen zur Verfügung stehen (y), Phase P1 neu gestartet (Schritt MS212). Stehen weitere geeignete Strahlkombinationen zur Verfügung, so wird die nächstbeste Strahlkombination in Schritt MS209c ausgewählt und mittels Handshake an den Slave übergeben. Diese Zusatzschritte nach Abschluss von Phase 2 (bzw. 3) sind nicht unbedingt für das Verfahren notwendig, sondern bilden lediglich optionale weitere Schritte, die zur Kommunikationsinitialisierung vorteilhaft sind

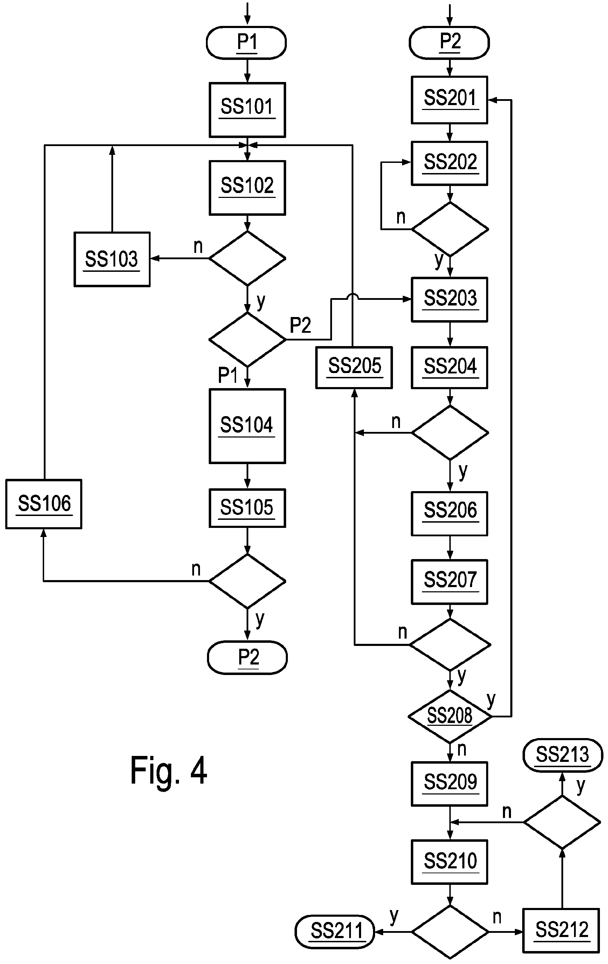

Figur 4 zeigt schematisch ein Betriebsverfahren für einen Slave-Senderempfänger gemäß dem vierten Aspekt der Erfindung. Das Betriebsverfahren beginnt mit einer ersten Phase P1. In Schritt SS101 wird der Slave auf einer ersten Strahlposition initialisiert. In Schritt S102 wartet der Slave in dieser Slave-Strahlrichtung eine vorbestimmte Verweilzeit auf den Empfang eines DISCOVER-Paketes eines Masters. Die Verweilzeit des Slaves ist dabei länger als eine Verweilzeit des Masters. Hat der Slave innerhalb der Verweilzeit kein DISCOVER-Paket eines Masters empfangen (n), so stellt er eine nächste Slave-Strahlrichtung in Schritt SS103 ein und wartet wieder in Schritt SS102 auf den Empfang eines DISCOVER-Paketes. Hat der Slave ein DISCOVER-Paket empfangen (y), so sendet er in Schritt SS104 ein Antwortsignal an den Master, von dem er das DISCOVER-Paket erhalten hat. Mit dem Antwortsignal kann der Slave optional dem Master zusätzlich Information über die Signalqualitätsparameter des empfangenden Paketes sowie über seine aktuelle Slave-Strahlrichtung senden, alternativ oder zusätzlich eine Bewertung LOS/NLOS, oder ein Verzögerungsprofil in Form von Rohdaten. Hat der Slave kein DISCOVER-Paket der ersten Phase, sondern ein DISCOVER-Paket der zweiten Phase erhalten, so fährt er mit Schritt SS203 fort, in diesem Fall enthält das DISCOVER-Paket zusätzlich eine Slave-Steuerungsstrahlrichtung. In Schritt SS105 wartet der Slave, nachdem er in Schritt SS104 ein Antwortsignal an den Master gesendet hat, auf den Empfang eines Startsignals für die zweite Phase P2 oder die dritte Phase P3, oder auf das Überschreiten einer vorbestimmten Zeit für ein Timeout. Hat der Slave kein Startsignal für die zweite Phase erhalten (n), so setzt er seine Slave-Strahlrichtung in Schritt SS106 um eine Position zurück und startet erneut mit Schritt SS102. Hat der Slave vom Master ein Startsignal für die zweite Phase P2 erhalten (y), so startet der Slave die zweite Phase, indem er in Schritt SS201 auf die vom Master bei der Einleitung der zweiten Phase übermittelte Slave-Strahlrichtung umschaltet. In Schritt SS202 speichert der Slave Parameter (z.B. die Empfangssignalleistung) und Inhalte der empfangenen Pakete (d.h. z.B. die enthaltene Master-Strahlrichtung, in die das Paket gesendet wurde, die Sendeleistung) sowie die Ergebnisse von Signalqualitätsparameterbestimmungen der empfangenen Pakete. Ist die Verweilzeit, die der Master dem Slave mit der Einleitung der zweiten Phase übermittelt hat, noch nicht abgelaufen (n), so fährt der Slave mit Schritt SS202 solange fort, bis die Zeit abgelaufen ist (y). Nach Ablauf der Verweilzeit schaltet der Slave in Schritt SS203 auf die vom Master übermittelte Slave-Steuerungsstrahlrichtung. Dort kann der Slave in Schritt SS204 optional auf den Empfang eines Abfragepaketes vom Master warten und nachdem er dieses empfangen hat (y), mit Schritt SS206 fortfahren. Empfängt der Slave in Schritt SS204 kein Abfrage-Paket des Masters, so setzt der Slave seine Strahlrichtung um eine Position zurück in Schritt SS205 und beginnt erneut mit Schritt SS102 der ersten Phase. In Schritt SS206 sendet der Slave die Ergebnisse der Signalqualitätsparameterbestimmungen sowie gegebenenfalls weitere Information über die empfangenen Pakete an den Master. Schritt SS206 kann entweder nach einer Verweilzeit des Slaves in Schritt SS204 auf ein Abfragepaket des Masters hin erfolgen oder die Übersendung der Information in Schritt SS206 erfolgt auf den Ablauf der Verweilzeit hin. In Schritt SS207 kann der Slave wiederum auf ein Steuersignal des Masters oder den Ablauf einer Timeout-Zeit warten. Empfängt der Slave während der Timeout-Zeit kein Paket des Masters (n), so setzt der Slave wiederum mit Schritt SS205 fort. Hat der Slave jedoch vom Master ein Paket empfangen, so wertet er dieses aus in Schritt SS208. Übermittelt der Master mit dem Paket die Aufforderung, eine neue Slave-Strahlrichtung einzunehmen, so setzt der Slave Phase P2 mit der neuen Slave-Strahlrichtung in Schritt SS201 fort. Hat der Master mit dem Paket erklärt, dass die iterative Kombinationssuche in Phase P2 beendet ist (n), so kann in Schritt SS210 der Slave vom Master die optimale Ausrichtung empfangen und über ein Handshake-Protokoll absichern. Optional kann in Schritt SS209 der Slave zusammen mit dem Master eine iterative Evaluierung von vom Master für geeignet bestimmten Strahlkombinationen durchführen. Ist der Handshake in Schritt SS210 erfolgreich durchgeführt worden (y), so werden die Antennen entsprechend ausgerichtet und das Verfahren ist damit abgeschlossen (SS211). Ist der Handshake nicht erfolgreich (n), so wird die Slave-Strahlrichtung als ungeeignet verworfen (SS212) und, falls keine weiteren Strahlkombinationen als geeignet identifiziert worden sind, Phase P1 neu gestartet in Schritt SS213. Sind weitere geeignete Strahlkombinationen vom Master identifiziert worden, so wird eine nächste Strahlkombination vom Master ausgewählt und mit einem Handshake an den Slave die Strahlkombination und die Slave-Strahlrichtung in Schritt SS210 übergeben.

Das erfindungsgemäße Verfahren zielt zusammenfassend darauf ab, aus N möglichen Strahlkombinationen die beste zu finden. Sobald in der ersten Phase eine erste Verbindung gefunden wurde, die zum Signalaustausch geeignet ist, wird die Suche der ersten Phase gestoppt. Andererseits soll die bestmögliche Verbindung gefunden werden, und das ist nicht notwendigerweise die gefundene erste Verbindung. Sollte beim Testen von N Strahlkombinationen bei der m-ten Kombination eine direkte Sichtverbindung gefunden werden, ist es nicht mehr notwendig, die verbleibenden N-m Strahlkombinationen zu testen, d.h. ein vollständiger Test aller möglichen N Strahlkombinationen ist unnötig. Beispiel: Es gibt die Strahlkombinationen 1, 2,...,99, 100. Diese werden in z.B. dieser Reihenfolge getestet. Ist jedoch die erste für eine Kommunikation die gefundene Strahlkombination 30 wird diese Verbindung auf LOS / NLOS untersucht. Handelt es sich um eine NLOS-Verbindung, besteht die Möglichkeit, im noch nicht getesteten Suchraum eine LOS-Verbindung zu finden. Also wird in Phase 2 der verbleibende Suchraum untersucht. Da allerdings bereits aufgrund der in Phase 1 erreichten Erstausrichtung eine Verbindung zum Signalaustausch besteht, kann die beschleunigte Suche entsprechend Phase 2 verwendet werden. Diese beschleunigte Suche wird jedoch nur so lange durchgeführt, bis erstmalig eine LOS-Verbindung gefunden wurde, d.h. nach jeder Iterationsschleife (MS205) wird überprüft, ob unter der oder den gefundenen Strahlkombinationen eine LOS-Verbindung ist. Sofern dies zutrifft, kann die Überprüfung des verbleibenden Suchraums abgebrochen werden, da in dem verbleibenden Suchraum im Prinzip keine bessere Verbindung zu finden sein kann. Es wird dann direkt in Phase 3 gesprungen.

Ist eine LOS-Verbindung gefunden, könnte diese einfach als optimale Verbindung verwendet werden. Durch die Überlappung der Antennenstrahlen ist jedoch denkbar, dass auch ein benachbarter Strahl eine LOS-Verbindung ermöglicht, d.h. dass in obigen Beispiel auch die Kombination 31 eine solche Verbindung ermöglichen könnte (wobei 31 die direkt benachbarten Strahlungsrichtungen bezeichnet.) Also sollten zum Finden der optimalen Verbindung nicht alle verbleibenden Strahlkombinationen getestet werden, sondern nur noch einige wenige Kombinationen aus der lokalen Nachbarschaft der gefundenen. Für diesen Test ist die dritte Phase vorgesehen. Diese wird immer eingeleitet, sobald in der ersten oder in der zweiten Phase eine erste LOS-Verbindung gefunden wurde. In dieser dritten Phase erfolgt nun die Optimierung der gefundenen LOS-Verbindung. Dies kann einfach so erfolgen, dass die benachbarten Kombinationen überprüft werden, mit einem gesteuerten Vorgehen wie in Phase 2, nur dass der Suchraum entsprechend eingeschränkt wird, der Master also nicht mehr in alle Strahlrichtungen sendet. Sofern das Verfahren so erfolgt, also in Phase 1,2 und 3 die gleiche Rasterung der Strahlen genommen wird, gibt es keinen Unterschied zwischen Grob- und Feinabtastung. Die Optimierung der LOS-Verbindung kann jedoch auch feiner erfolgen, und dazu kann z.B. der RSSI-Gradient herangezogen werden. Dazu wird zunächst an einer oder mehreren benachbarten Positionen getestet, der Gradient des RSSI ermittelt und daraus dann die Richtung bestimmt, in der der Strahl geschwenkt werden sollte. Dies wird solange durchgeführt, bis der Gradient in alle Schwenkrichtungen abnimmt.

## Patentansprüche

1. Verfahren zur automatischen Ausrichtung von Antennen von Stationen einer Richtfunkstrecke, wobei eine Station als Master (M, 1100) und mindestens eine andere Station als Slave (S, 1200) konfiguriert ist; wobei
in einer ersten Phase (P1)
- der Master und der Slave anhand einer vorbestimmten Anzahl wechselseitiger Ausrichtungen eine Abtastung zur Bestimmung einer Erstausrichtung durchführen (S111, S112, S113, S121, S122, S123), als welche zeitlich unmittelbar die erste der eingestellten wechselseitigen Ausrichtungen bestimmt wird, in der Master und Slave Signale miteinander austauschen können, und
- die bestimmte Erstausrichtung als eine Steuerungsstrahlrichtung des Masters, nachfolgend Master-Steuerungsstrahlrichtung, und als eine Steuerungsstrahlrichtung des Slaves, nachfolgend Slave-Steuerungsstrahlrichtung, festgelegt wird,
**dadurch gekennzeichnet, dass**
- ermittelt wird (S114), ob die eingestellte Erstausrichtung einer direkten Sichtverbindung des Masters mit dem Slave entspricht, und anschließend
- entweder, nämlich im Falle, dass die eingestellte Erstausrichtung einer direkten Sichtverbindung entspricht, in eine dritte Phase (P3) gesprungen wird,
- oder, nämlich im Falle, dass die eingestellte Erstausrichtung einer direkten Sichtverbindung nicht entspricht (S115, S124);
in einer zweiten Phase (P2)
- über eine Anzahl von Iterationen in einer jeweiligen Iterationsschleife
- der Master eine neue Slave-Strahlrichtung (S226) und eine Verweilzeit (S227), in der der Slave in dieser neuen Slave-Strahlrichtung empfangen soll, dem Slave vorgibt (S216),
- der Master anschließend Suchsignale in eine vorbestimmte Anzahl seiner Master-Strahlrichtungen sendet, ohne eine Wartezeit in den Master-Strahlrichtungen zu verbleiben (S217),
- nach dem Ablauf der Verweilzeit der Master die Master-Steuerungsstrahlrichtung (S218) und der Slave die Slave-Steuerungsstrahlrichtung einstellt und der Slave entweder Suchsignal-Empfangsdaten bezüglich der aus den Master-Strahlrichtungen empfangenen Suchsignale zur Signalqualitätsparameterbestimmung (S228) an den Master übermittelt oder Ergebnisse einer beim Slave selbst durchgeführten Signalqualitätsparameterbestimmung bezüglich der aus den Master-Strahlrichtungen empfangenen Suchsignale an den Master übermittelt (S229),
- weiterhin ermittelt wird, ob eine der in dieser Iterationsschleife getesteten Strahlkombinationen als Zweitausrichtung einer direkten Sichtverbindung entspricht (S219), und wenn dies der Fall ist (S220), in die dritte Phase (P3) gesprungen wird, und wenn dies nicht der Fall ist, die Iterationsschleife unter Vorgabe einer anderen Slave-Strahlrichtung erneut durchgeführt wird (S216); und wobei
in der dritten Phase (P3)
- ausgehend von der Erstausrichtung oder der Zweitausrichtung eine vom Master gesteuerte Feinabtastung zur Bestimmung einer Feinausrichtung in einer vorbestimmten Ausrichtungsumgebung der Erstausrichtung oder der Zweitausrichtung durchgeführt wird (S322, S332), die eine nach vorbestimmten Signalqualitätskriterien beste Antennenausrichtung bildet, und danach die bestimmte beste Antennenausrichtung bei Master (S323) und Slave (S333) eingestellt wird.

2. Verfahren nach Anspruch 1, bei dem bei der Erstausrichtung in der ersten Phase (P1)
- der Master (M) das Suchsignal in eine erste Master-Strahlrichtung sendet und anschließend für eine definierte Wartezeit auf ein Antwortsignal wartet und
- bei Ausbleiben eines Antwortsignals nach der Wartezeit zu einer zweiten Master-Strahlrichtung wechselt,
- der Slave (S) in einer jeweiligen Slave-Strahlrichtung eine definierte Verweilzeit, die größer ist als die Wartezeit des Masters auf den Empfang des Suchsignals wartet und - bei Ausbleiben des Suchsignals nach der Verweilzeit zu einer jeweils nächsten Slave-Strahlrichtung wechselt,
- bei Empfang eines Suchsignals ein Antwortsignal in die jeweilige Slave-Strahlrichtung sendet.

3. Verfahren nach Anspruch 1 oder 2, bei dem die Ermittlung, ob die Erstausrichtung einer direkten Sichtverbindung des Masters (M) mit dem Slave (S) entspricht, ein Ermitteln eines Kanalverzögerungsprofils eines Funkübertragungskanals für die Richtfunkstrecke zwischen Master und Slave umfasst.

4. Verfahren nach mindestens einem der vorstehenden Ansprüche, bei dem die Ermittlung, ob die Erstausrichtung einer direkten Sichtverbindung des Masters (M) mit dem Slave (S) entspricht, ein Ermitteln einer Signal-Laufzeit oder einer Empfangssignalstärke in der Erstausrichtung zwischen Master und Slave umfasst.

5. Verfahren nach mindestens einem der vorstehenden Ansprüche, weiter umfassend
- ein Übermitteln von Slave-Strahlrichtungsinformation vom Slave (S) an den Master (M),
- wobei der Master, nachdem die Erstausrichtung bestimmt wurde, anhand der dann vorliegenden Slave-Strahlrichtungsinformation und einer eingestellten Master-Strahlrichtung des Masters rechnerisch ermittelt, ob die eingestellte Erstausrichtung der direkten Sichtverbindung des Masters mit dem Slave entspricht.

6. Verfahren nach mindestens einem der vorstehenden Ansprüche, bei dem der Master (M) oder der Slave (S) bei einem Erfassen eines übersteuerten Signals die Zeitdauer dieses übersteuerten Signals misst, aus der Zeitdauer des übersteuerten Signals und einem Vergleich mit einer Soll-Zeitdauer eines erwarteten Such- oder Antwortsignals auf den Empfang des erwarteten Such- oder Antwortsignals geschlossen wird und eine als Reaktion auf den Empfang dieses erwarteten Such- oder Antwortsignals vorgesehene Antwort sendet.

7. Verfahren nach Anspruch 6, bei dem, wenn der Master (M) ein übersteuertes Antwortsignal empfängt, eine neue Sendeleistung des Suchsignals bestimmt wird, die niedriger ist als die zuvor verwendete, und anschließend der Master das Suchsignal mit der neuen Sendeleistung sendet, und bei dem dieser Prozess iterativ durchgeführt wird, bis entweder ein nicht-übersteuerter Austausch von Suchsignal und Antwortsignal erfolgt oder ein Vorliegen eines Abbruchkriteriums ohne Empfang eines nicht-übersteuerten Signals festgestellt wird.

8. Verfahren nach mindestens einem der vorstehenden Ansprüche, bei dem mehrere Slaves (S) verwendet werden, die in unterschiedlichen Zeitschlitzen adressiert werden.

9. Master-Senderempfänger (1100) zum Betrieb einer Richtfunkstrecke, mit
einer Sende-Empfangseinheit (1120), die ausgebildet ist, in einstellbaren Richtungen über mindestens eine Antenne (1125) Signale zu erzeugen, zu senden und zu empfangen, und
einer Master-Steuereinheit (1110), die ausgebildet ist, zur automatischen Ausrichtung der mindestens einen Antenne (1125)
in einer ersten Phase (P1)
- die Sende-Empfangseinheit (1120) zur Durchführung einer Abtastung zur Bestimmung einer wechselseitigen Erstausrichtung mit einem Slave-Senderempfänger (1200), nachfolgend Slave, anzusteuern, als welche zeitlich unmittelbar die erste der eingestellten wechselseitigen Ausrichtungen bestimmt wird, in der Master und Slave Signale miteinander austauschen können,
- die bestimmte Erstausrichtung als eine Steuerungsstrahlrichtung des Masters, nachfolgend Master-Steuerungsstrahlrichtung, sowie optional zusätzlich eine Steuerungsstrahlrichtung des Slaves, nachfolgend Slave-Steuerungsstrahlrichtung, festzulegen,
**dadurch gekennzeichnet, dass** die Master-Steuereinheit weiterhin ausgebildet ist,- zu ermitteln, ob die eingestellte Erstausrichtung einer direkten Sichtverbindung des Masters mit dem Slave entspricht, anschließend
- entweder, nämlich im Falle, dass die eingestellte Erstausrichtung einer direkten Sichtverbindung entspricht, in eine dritte Phase (P3) zu springen,
- oder, nämlich im Falle, dass die eingestellte Erstausrichtung einer direkten Sichtverbindung nicht entspricht,
in einer zweiten Phase (P2)
- über eine Anzahl von Iterationen in einer jeweiligen Iterationsschleife
- eine neue Slave-Strahlrichtung und eine Verweilzeit, in der der Slave in dieser neuen Slave-Strahlrichtung empfangen soll, dem Slave vorzugeben,
- anschließend Suchsignale in eine vorbestimmte Anzahl der Master-Strahlrichtungen zu senden, ohne eine Wartezeit in den Master-Strahlrichtungen zu verbleiben,
- nach dem Ablauf der Verweilzeit die Master-Steuerungsstrahlrichtung einzustellen und vom Slave entweder Suchsignal-Empfangsdaten bezüglich der aus den Master-Strahlrichtungen empfangenen Suchsignale zur Signalqualitätsparameterbestimmung zu empfangen oder Ergebnisse einer beim Slave selbst durchgeführten Signalqualitätsparameterbestimmung bezüglich der aus den Master-Strahlrichtungen empfangenen Suchsignale zu empfangen,
- weiterhin zu ermitteln, ob eine der in dieser Iterationsschleife getesteten Strahlkombinationen als Zweitausrichtung einer direkten Sichtverbindung entspricht und wenn dies der Fall ist in die dritte Phase (P3) zu springen, und wenn dies nicht der Fall ist, die Iterationsschleife unter Vorgabe einer anderen Slave-Strahlrichtung erneut durchzuführen, und
in der dritten Phase (P3)
- ausgehend von der Erstausrichtung oder der Zweitausrichtung eine Feinabtastung zur Bestimmung einer Feinausrichtung in einer vorbestimmten Ausrichtungsumgebung der Erstausrichtung oder der Zweitausrichtung zu steuern und durchzuführen, die eine nach vorbestimmten Signalqualitätskriterien beste Antennenausrichtung bildet, und danach die bestimmte beste Antennenausrichtung einzustellen.

10. Master-Senderempfänger (1100) nach Anspruch 9, der ausgebildet ist, bei der Durchführung der Abtastung in der ersten Phase (P1)
- ein Suchsignal in eine erste Master-Strahlrichtung zu senden und anschließend für eine definierte Wartezeit auf ein Antwortsignal zu warten und
- bei Ausbleiben eines Antwortsignals nach der Wartezeit zu einer zweiten Master-Strahlrichtung zu wechseln.

11. Betriebsverfahren für einen Master-Senderempfänger (1100) einer Richtfunkstrecke, nachfolgend Master, mit einer Steuerungseinheit (1110) und einer Sende-Empfangseinheit (1120) mit mindestens einer Antenne (1125), bei dem
- der Master (1100) im Austausch mit einem Slave-Senderempfänger (1200), nachfolgend Slave, eine Abtastung zur Bestimmung einer wechselseitigen Erstausrichtung der mindestens einen Antenne (1125) durchführt, als welche zeitlich unmittelbar die erste der eingestellten wechselseitigen Ausrichtungen bestimmt wird, in der der Master mit dem Slave Signale austauschen kann,
- die bestimmte Erstausrichtung als eine Steuerungsstrahlrichtung des Masters, nachfolgend Master-Steuerungsstrahlrichtung, und als eine Steuerungsstrahlrichtung des Slaves, nachfolgend Slave-Steuerungsstrahlrichtung, festgelegt wird,
**dadurch gekennzeichnet, dass**
- ermittelt wird, ob die eingestellte Erstausrichtung einer direkten Sichtverbindung des Masters mit dem Slave entspricht, anschließend
- entweder, nämlich im Falle, dass die eingestellte Erstausrichtung einer direkten Sichtverbindung entspricht, in eine dritte Phase (P3) gesprungen wird,
- oder, nämlich im Falle, dass die eingestellte Erstausrichtung einer direkten Sichtverbindung nicht entspricht,
in einer zweiten Phase (P2)
- über eine Anzahl von Iterationen in einer jeweiligen Iterationsschleife
- der Master eine neue Slave-Strahlrichtung und eine Verweilzeit, in der der Slave in dieser neuen Slave-Strahlrichtung empfangen soll, dem Slave vorgibt,
- der Master anschließend Suchsignale in eine vorbestimmte Anzahl seiner Master-Strahlrichtungen sendet, ohne eine Wartezeit in den Master-Strahlrichtungen zu verbleiben,
- nach dem Ablauf der Verweilzeit der Master die Master-Steuerungsstrahlrichtung einstellt und vom Slave entweder Suchsignal-Empfangsdaten bezüglich der aus den Master-Strahlrichtungen empfangenen Suchsignale zur Signalqualitätsparameterbestimmung empfängt oder Ergebnisse einer beim Slave selbst durchgeführten Signalqualitätsparameterbestimmung bezüglich der aus den Master-Strahlrichtungen empfangenen Suchsignale empfängt,
- weiterhin ermittelt wird, ob eine der in dieser Iterationsschleife getesteten Strahlkombinationen als Zweitausrichtung einer direkten Sichtverbindung entspricht, und wenn dies der Fall ist, in die dritte Phase (P3) gesprungen wird, und wenn dies nicht der Fall ist, die Iterationsschleife unter Vorgabe einer anderen Slave-Strahlrichtung erneut durchgeführt wird, und wobei
in der dritten Phase (P3)
- ausgehend von der Erstausrichtung oder der Zweitausrichtung eine vom Master gesteuerte Feinabtastung zur Bestimmung einer Feinausrichtung in einer vorbestimmten Ausrichtungsumgebung der Erstausrichtung oder der Zweitausrichtung durchgeführt wird, die eine nach vorbestimmten Signalqualitätskriterien beste Antennenausrichtung bildet, und danach die bestimmte beste Antennenausrichtung beim Master eingestellt wird.

12. Slave-Senderempfänger (1200), nachfolgend Slave, zum Betrieb einer Richtfunkstrecke mit
einer Sende-Empfangseinheit (1220), die ausgebildet ist, Signale zu erzeugen, in einstellbaren Richtungen über mindestens eine Antenne (1225) zu senden und zu empfangen und
einer Slave-Steuereinheit (1210), die ausgebildet ist, zur automatischen Ausrichtung der mindestens einen Antenne (1225)
in einer ersten Phase (P1)
- die Sende-Empfangseinheit (1220) zur Durchführung einer Abtastung zur Bestimmung einer wechselseitigen Erstausrichtung mit einem Master-Senderempfänger (1100), nachfolgend Master, anzusteuern, als welche zeitlich unmittelbar die erste der eingestellten wechselseitigen Ausrichtungen bestimmt wird, in der Master und Slave Signale miteinander austauschen können,
- die bestimmte Erstausrichtung als eine Steuerungsstrahlrichtung des Slaves, nachfolgend Slave-Steuerungsstrahlrichtung, festzulegen,
**dadurch gekennzeichnet, dass** die Slave-Steuereinheit weiterhin ausgebildet ist,
- zu ermitteln, ob die eingestellte Erstausrichtung einer direkten Sichtverbindung des Masters mit dem Slave entspricht,
- eine Steuerungsstrahlrichtung des Slaves, nachfolgend Slave-Steuerungsstrahlrichtung, zu ermitteln,
- entweder, nämlich im Falle, dass die eingestellte Erstausrichtung einer direkten Sichtverbindung entspricht, in eine dritte Phase (P3) zu springen,
- oder, nämlich im Falle, dass die eingestellte Erstausrichtung einer direkten Sichtverbindung nicht entspricht,
in einer zweiten Phase (P2)
- über eine Anzahl von Iterationen in einer jeweiligen Iterationsschleife
- eine Vorgabe einer neuen Slave-Strahlrichtung und eine Verweilzeit, in der der Slave in dieser neuen Slave-Strahlrichtung empfangen soll, vom Master zu empfangen und einzustellen,
- anschließend während der Verweilzeit vom Master in einer Anzahl von Master-Strahlrichtungen ausgesandte Suchsignale zu empfangen,
- nach dem Ablauf der Verweilzeit die Slave-Steuerungsstrahlrichtung einzustellen und dem Master entweder Suchsignal-Empfangsdaten bezüglich der aus den Master-Strahlrichtungen empfangenen Suchsignale zur Signalqualitätsparameterbestimmung zu übermitteln oder dem Master Ergebnisse einer beim Slave selbst durchgeführten Signalqualitätsparameterbestimmung bezüglich der aus den Master-Strahlrichtungen empfangenen Suchsignale zu übermitteln,
- weiterhin zu ermitteln, ob eine der in dieser Iterationsschleife getesteten Strahlkombinationen als Zweitausrichtung einer direkten Sichtverbindung entspricht, und wenn dies der Fall ist, in die dritte Phase (P3) zu springen, und wenn dies nicht der Fall ist, die Iterationsschleife nach Vorgabe einer anderen Slave-Strahlrichtung erneut durchzuführen, und
in der dritten Phase (P3)
- ausgehend von der Erstausrichtung oder der Zweitausrichtung eine Feinabtastung zur Bestimmung einer Feinausrichtung in einer vorbestimmten Ausrichtungsumgebung der Erstausrichtung oder der Zweitausrichtung zu steuern und durchzuführen, die eine nach vorbestimmten Signalqualitätskriterien beste Antennenausrichtung bildet, und danach die bestimmte beste Antennenausrichtung einzustellen.

13. Slave (1200) nach Anspruch 12, bei dem die Slave-Steuereinheit (1210) ausgebildet ist, bei der Abtastung in der ersten Phase (P1)
- in einer ersten Slave-Strahlrichtung eine definierte Verweilzeit, die größer ist als die Verweilzeit des Masters (1100), auf den Empfang eines Suchsignals des Masters zu warten und
- bei Ausbleiben eines Suchsignals nach der Verweilzeit zu einer zweiten Slave-Strahlrichtung zu wechseln,
- bei Empfang eines Suchsignals ein Antwortsignal in die erste Slave-Strahlrichtung zu senden.

14. Betriebsverfahren für einen Slave-Senderempfänger (1200), nachfolgend Slave, mit einer Steuerungseinheit (1210) und einer Sende-Empfangseinheit (1220) mit mindestens einer Antenne (1225), bei dem
- der Slave mit dem Master (1100) anhand einer vorbestimmten Anzahl wechselseitiger Ausrichtungen eine Abtastung zur Bestimmung der Erstausrichtung durchführt, als welche zeitlich unmittelbar die erste der eingestellten wechselseitigen Ausrichtungen bestimmt wird, in der Master und Slave Signale miteinander austauschen können, und
- die bestimmte Erstausrichtung als eine Steuerungsstrahlrichtung des Slaves, nachfolgend Slave-Steuerungsstrahlrichtung, festgelegt wird,
**dadurch gekennzeichnet, dass**
- ermittelt wird, ob die eingestellte Erstausrichtung einer direkten Sichtverbindung des Masters mit dem Slave entspricht, anschließend
- entweder, nämlich im Falle, dass die eingestellte Erstausrichtung einer direkten Sichtverbindung entspricht, in eine dritte Phase (P3) gesprungen wird,
- oder, nämlich im Falle, dass die eingestellte Erstausrichtung einer direkten Sichtverbindung nicht entspricht,
in einer zweiten Phase (P2)
- über eine Anzahl von Iterationen in einer jeweiligen Iterationsschleife
- der Slave eine neue Slave-Strahlrichtung und eine Verweilzeit, in der der Slave in dieser neuen Slave-Strahlrichtung empfangen soll, vom Master vorgegeben bekommt und einstellt,
- anschließend während der Verweilzeit vom Master in einer Anzahl von Master-Strahlrichtungen ausgesandte Suchsignale empfangen werden,
- nach dem Ablauf der Verweilzeit die Slave-Steuerungsstrahlrichtung eingestellt wird und dem Master entweder Suchsignal-Empfangsdaten bezüglich der aus den Master-Strahlrichtungen empfangenen Suchsignale zur Signalqualitätsparameterbestimmung zu übermitteln oder dem Master Ergebnisse einer beim Slave selbst durchgeführten Signalqualitätsparameterbestimmung bezüglich der aus den Master-Strahlrichtungen empfangenen Suchsignale übermittelt werden,
- weiterhin ermittelt wird, ob eine der in dieser Iterationsschleife getesteten Strahlkombinationen als Zweitausrichtung einer direkten Sichtverbindung entspricht, und wenn dies der Fall ist, in die dritte Phase (P3) gesprungen wird, und wenn dies nicht der Fall ist, die Iterationsschleife unter Vorgabe einer anderen Slave-Strahlrichtung erneut durchgeführt wird, und wobei
in der dritten Phase (P3)
- ausgehend von der Erstausrichtung oder der Zweitausrichtung eine Feinabtastung zur Bestimmung einer Feinausrichtung in einer vorbestimmten Ausrichtungsumgebung der Erstausrichtung oder der Zweitausrichtung durchgeführt wird, die eine nach vorbestimmten Signalqualitätskriterien beste Antennenausrichtung bildet, und danach die bestimmte beste Antennenausrichtung beim Slave eingestellt wird.

15. Richtfunkanordnung (1000) aufweisend einen Master-Senderempfänger (1100) Anspruch 9 oder 10 und mindestens einen Slave-Senderempfänger (1200) Anspruch 12 oder 13.

16. Senderempfänger, umfassend in baulich integrierter Form einen Master-Senderempfänger (1100) Anspruch 9 oder 10 und mindestens einen Slave-Senderempfänger (1200) Anspruch 12 oder 13.

## Claims

1. Method for the automatic alignment of antennae of stations of a directional radio link, wherein one station is configured as master (M, 1100) and at least one other station is configured as slave (S 1200); wherein
in a first phase (P1)
- the master and the slave carry out a scan based on a predetermined number of mutual alignments in order to determine a first alignment (S111, S112, S113, S121, S122, S123), which is immediately specified as the first of the adjusted mutual alignments, in which master and slave can exchange signals with one another, and
- the specified first alignment is defined as a control beam direction of the master, hereinafter master control beam direction, and as a control beam direction of the slave, hereinafter slave control beam direction,
**characterised in that**
- it is determined (S114) whether the adjusted first alignment corresponds to a direct visible connection of the master with the slave, and then
- either, namely in the case that the adjusted first alignment corresponds to a direct visible connection, a jump is made to the third phase (P3),
- or, namely in the case that the adjusted first alignment does not correspond to a direct visible connection (S115, S124);
in a second phase (P2)
- via a number of iterations in a respective iteration loop
- the master specifies to the slave (S216) a new slave beam direction (S226) and a dwell time (S227) during which the slave should receive in this new slave beam direction,
- the master then transmits search signals to a predetermined number of its master beam directions, without any waiting time in the master beam directions (S217),
- after expiry of the dwell time the master adjusts the master control beam direction (S218) and the slave adjusts the slave control beam direction and the slave either transmits signal reception data regarding the search signals received from the master beam directions for the signal quality parameter determination (S228) to the master or transmits results of a signal quality parameter determination carried out by the slave itself regarding the search signals received from the master beam directions to the master (S229),
- furthermore it is determined whether one of the beam combinations tested in this iteration loop as second alignment corresponds to a direct visible connection (S219), and if this is the case (S220) a jump is made to the third phase (P3), and if this is not the case the iteration loop is repeated by specifying a different slave beam direction (S216); and wherein
in the third phase (P3)
- starting from the first alignment or the second alignment a fine scan controlled by the master is carried out in order to determine a fine alignment in a predetermined alignment environment of the first alignment or of the second alignment (S322, S332), which forms a best antenna alignment according to predetermined signal quality criteria, and the specified best antenna alignment is then adjusted at the master (S323) and slave (S333).

2. Method according to claim 1, in which with the first alignment in the first phase (P1)
- the master (M) transmits the search signal in a first master beam direction and then waits for a defined waiting time for a response signal, and
- if a response signal fails to appear, changes to a second master beam direction after the waiting time,
- the slave (S) in a particular slave beam direction waits for a defined dwell time, which is longer than the waiting time of the master, to receive the search signal and
- if no search signal is received, changes after the dwell time to the next respective slave beam direction,
- on receiving a search signal, transmits a response signal in the respective slave beam direction.

3. Method according to claim 1 or 2, in which the determination as to whether the first alignment corresponds to a direct visible connection of the master (M) with the slave (S) includes a determination of a channel delay profile of a radio transmission channel for the directional radio link between master and slave.

4. Method according to at least one of the preceding claims, in which the determination as to whether the first alignment corresponds to a direct visible connection between the master (M) and the slave (S) includes a determination of a signal propagation time or a reception signal strength in the first alignment between master and slave.

5. Method according to at least one of the preceding claims, further comprising
- a determination of slave beam direction information from the slave (S) to the master (M),
- wherein the master, after the first alignment was specified, determines by computation on the basis of the then existing slave beam direction information and an adjusted master beam direction of the master, whether the adjusted first alignment corresponds to the direct visible connection of the master with the slave.

6. Method according to at least one of the preceding claims, in which the master (M) or the slave (S) during a detection of an overmodulated signal measures the duration of this overmodulated signal, is closed from the duration of the overmodulated signal and a comparison with a target duration of an expected search or response signal to the reception of the expected search or response signal, and sends a designated response as a reaction to the receipt of this expected search or response signal.

7. Method according to claim 6, in which if the master (M) receives an overmodulated response signal, a new transmitting power of the search signal is specified, which is less than that previously used, and the master then transmits the search signal with the new transmitting power, and in which this process is carried out iteratively until either a non-overmodulated exchange of search signal and response signal takes place or the presence of an interruption criterion without reception of a non-overmodulated signal is established.

8. Method according to at least one of the preceding claims, in which multiple slaves (S) are used, which are addressed in different time slots.

9. Master transceiver (1100) for the operation of a directional radio link, with a transceiver unit (1120) that is designed to generate, transmit and receive signals in adjustable directions via at least one antenna (1125), and a master control unit (1110) that is designed for the automatic alignment of the at least one antenna (1125)
in a first phase (P1)
- to control the transceiver unit (1120) for carrying out a scan in order to determine a mutual first alignment with a slave transceiver (1200), hereinafter slave, which is immediately specified as the first of the adjusted mutual alignments, in which master and slave can exchange signals with one another,
- to specify the determined first alignment as a control beam direction of the master, hereinafter master control beam direction, as well as optionally to specify in addition a control beam direction of the slave, hereinafter slave control beam direction,
**characterised by** the fact that the master control unit is furthermore designed to determine whether the adjusted first alignment corresponds to a direct visible connection of the master with the slave, then
- either, namely in the case that the adjusted first alignment corresponds to a direct visible connection, to jump to a third phase (P3),
- or, namely in the case that the adjusted first alignment does not correspond to a direct visible connection,
in a second phase (P2)
- via a number of iterations in a particular iteration loop
- to specify to the slave a new slave beam direction and a dwell time in which the slave should receive in this new slave beam direction,
- then to transmit search signals in a predetermined number of the master beam directions, without any waiting time in the master beam directions,
- after the expiry of the dwell time, to adjust the master control beam direction and to receive from the slave either search signal reception data relating to the search signals received from the master beam directions for the signal quality parameter determination or to receive results of a signal quality parameter determination carried out by the slave itself regarding the search signals received from the master beam directions,
- furthermore to determine whether one of the beam combination tested in this iteration loop as second alignment corresponds to a direct visible connection, and if this is the case to jump to the third phase (P3), and if this is not the case to repeat the iteration loop by specifying another slave beam direction, and
in the third phase (P3)
- starting from the first alignment or the second alignment, to control and carry out a fine scan in order to determine a fine alignment in a predetermined alignment environment of the first alignment or of the second alignment, which forms a best antenna alignment according to predetermined signal quality criteria, and then to adjust the best antenna alignment determined.

10. Master transceiver (1100) according to claim 9, which is designed in the implementation of the scan in the first phase (P1)
- to transmit a search signal in a first master beam direction and then to wait for a defined waiting time for a response signal, and
- if no response signal is received, to change to a second master beam direction after the waiting time.

11. Operating method for a master transceiver (1100) of a directional radio link, hereinafter master, with a control unit (1110) and a transceiver unit (1120) with at least one antenna (1125), in which
- the master (1100) in the exchange with a slave transceiver (1200), hereinafter slave, carries out a scan in order to determine a mutual first alignment of the at least one antenna (1125), which is immediately specified as the first of the adjusted mutual alignments, in which the master can exchange signals with the slave,
- the specified first alignment is defined as a control beam direction of the master, hereinafter master control beam direction, and as a control beam direction of the slave, hereinafter slave control beam direction,
**characterised in that**
- it is determined whether the adjusted first alignment corresponds to a direct visible connection of the master with the slave, then
- either, namely in the case that the adjusted first alignment corresponds to a direct visible connection, to jump to the third phase (P3),
- or, namely in the case that the adjusted first alignment does not correspond to a direct visible connection,
in a second phase (P2)
- via a number of iterations in a respective iteration loop
- the master specifies to the slave a new slave beam direction and a dwell time in which the slave should receive in this new slave beam direction,
- the master then transmits search signals in a predetermined number of its master beam directions, without any waiting time in the master beam directions,
- after the expiry of the dwell time the master adjusts the master control beam direction and receives from the slave either search signal reception data relating to the search signals received from the master beam directions for the signal quality parameter determination or receives results of a signal quality parameter determination carried out by the slave itself regarding the search signals received from the master beam directions,
- furthermore it is determined whether a beam combination tested in this iteration loop runs as second alignment corresponds to a direct visible connection, and if this is the case a jump is made to the third phase (P3), and if this is not the case the iteration loop is repeated after stipulation of another slave beam direction, and wherein in the third phase (P3)
- starting from the first alignment or the second alignment a fine scan controlled by the master is carried out in order to determine a fine alignment in a predetermined alignment environment of the first alignment or of the second alignment, which forms a best antenna alignment according to predetermined signal quality criteria, and then the determined best antenna alignment is adjusted at the master.

12. Slave transceiver (1200), hereinafter slave, for the operation of a directional radio link with a transceiver unit (1220) that is designed to generate signals, to transmit signals in adjustable directions via at least one antenna (1225) and to receive signals, and with a slave control unit (1210) that is designed for the automatic alignment of the at least one antenna (1225) in a first phase (P1)
- to control the transceiver unit (1220) in order to carry out a scan to determine a mutual first alignment with a master transceiver (1100), hereinafter master, which is immediately specified as the first of the adjusted mutual alignments, in which the master and slave can exchange signals with one another,
- to define the specified first alignment as a control beam direction of the slave, hereinafter slave control beam direction,
**characterised by** the fact that the slave control unit is furthermore designed
- to determine whether the adjusted first alignment corresponds to a direct visible connection of the master with the slave,
- to determine a control beam direction of the slave, hereinafter slave control beam direction,
- either, namely in the case that the adjusted first alignment corresponds to a direct visible connection, to jump to a third phase (P3)
- or, namely in the case that the adjusted first alignment does not correspond to a direct visible connection,
in a second phase (P2)
- via a number of iterations in a respective iteration loop
- to receive from the master and adjust a specification of a new slave beam direction and a dwell time in which the slave should receive in this new slave beam direction,
- then during the dwell time to receive search signals sent from the master in a number of master beam directions,
- after the expiry of the dwell time, to adjust the slave control beam direction and to relay to the master either search signal reception data regarding the search signals received from the master beam directions relating to the signal quality parameter determination or to relay to the master results of a signal quality parameter determination carried out at the slave itself regarding the search signals received from the master beam directions,
- furthermore to determine whether a beam combination tested in this iteration loop corresponds as second alignment corresponds to a direct visible connection, and if this is the case to jump to the third phase (P3), and if this is not the case to repeat the iteration loop after stipulation of another slave beam direction, and
in the third phase (P3)
- starting from the first alignment or the second alignment to control and carry out a fine scan to determine a fine alignment in a predetermined alignment environment of the first alignment or the second alignment, which forms a best antenna alignment according to predetermined signal quality criteria, and then to adjust the determined best antenna alignment.

13. Slave (1200) according to claim 12, in which the slave control unit (1210) is designed, in the scan in the first phase (P1)
- to wait a defined dwell time in a first slave beam direction, which is longer than the dwell time of the master (1100), for the reception of a search signal of the master and
- if such a search signal is not received, to change after the dwell time to a second slave beam direction,
- on reception of a search signal, to transmit a response signal in the first slave beam direction.

14. Operating method for a slave transceiver (1200), hereinafter slave, with a control unit (1210) and a transceiver unit (1220) with at least one antenna (1225), in which
- the slave carries out a scan with the master (1100) on the basis of a predetermined number of mutual alignments in order to determine the first alignment, which is immediately specified as the first of the adjusted mutual alignments, in which master and slave can exchange signals with one another, and
- the specified first alignment is defined as a control beam direction of the slave, hereinafter slave control beam direction,
**characterised by** the fact that
- it is determined whether the adjusted first alignment corresponds to a direct visible connection of the master with the slave, then
- either, namely in the case that the adjusted first alignment corresponds to a direct visible connection, to jump to a third phase (P3),
- or, namely in the case that the adjusted first alignment does not correspond to a direct visible connection,
in a second phase (P2)
- via a number of iterations in a respective iteration loop - the slave receives and adjusts a new predetermined slave beam direction and a dwell time from the master, in which the slave is to receive in this new slave beam direction,
- then search signals sent by the master in a number of master beam directions are received during the dwell time,
- after the expiry of the dwell time the slave control beam direction is adjusted and either search signal reception data regarding the search signals for the signal quality parameters determination received from the master beam directions are transmitted to the master, or results of a signal quality parameter determination carried out by the slave itself relating to the search signals received from the master beam directions are relayed to the master,
- furthermore it is determined whether a beam combination tested in this iteration loop as second alignment corresponds to a direct visible connection, and if this is the case a jump is made to the third phase (P3), and if this is not the case the iteration loop is repeated with the specification of another slave beam direction, and wherein
in the third phase (P3)
- starting from the first alignment or the second alignment a fine scan is carried out to determine a fine alignment in a predetermined alignment environment of the first alignment or of the second alignment, which forms a best antenna alignment according to predetermined signal quality criteria, and following this the specified best antenna alignment is adjusted at the slave.

15. Directional radio link (1000) comprising a master transceiver (1100) according to claim 9 or 10 and at least one slave transceiver (1200) according to claim 12 or 13.

16. Transceiver, comprising in structurally integrated form a master transceiver (1100) according to claim 9 or 10 and at least one slave transceiver (1200) according to claim 12 or 13.

## Revendications

1. Procédé d'orientation automatique d'antennes de stations d'une liaison radio, une station étant configurée comme Maître (M, 1100) et au moins une autre station étant configurée comme Esclave (S, 1200) ; dans lequel
dans une première phase (P1)
- le maître et l'esclave effectuent, à l'aide d'un nombre prédéterminé d'orientations mutuelles, un balayage pour la détermination d'une première orientation (S111, S112, S113, S121, S122, S123), la première des orientations mutuelles réglées dans laquelle le maître et l'esclave peuvent échanger des signaux entre eux étant déterminée immédiatement en tant que telle et
- la première orientation déterminée est désignée en tant que direction de faisceau de commande du maître, appelée direction de faisceau de commande du maître dans la suite et en tant que direction de faisceau de commande de l'esclave, appelée direction de faisceau de commande de l'esclave dans la suite,
**caractérisé en ce que**
- il est déterminé (S 114) si la première orientation réglée correspond à un contact visuel direct du maître avec l'esclave puis
- soit, si la première orientation réglée correspond à un contact visuel direct, on passe à une troisième phase (P3),
- soit, si la première orientation réglée ne correspond pas à un contact visuel direct (S115, S124) ;
dans une deuxième phase (P2)
- par un nombre d'itérations dans une boucle d'itération correspondante,
- le maître impose (S216) à l'esclave une nouvelle direction de faisceau d'esclave (S226) et un temps de séjour (S227), dans lequel l'esclave doit recevoir dans cette nouvelle direction de faisceau d'esclave,
- le maître envoie ensuite des signaux de recherche dans un nombre prédéterminé de ses directions de faisceaux de maître sans rester (S217) pendant un temps d'attente dans les directions de faisceaux du maître,
- après l'écoulement du temps de séjour, le maître ajuste la direction de faisceau de commande du maître (S218) et l'esclave ajuste la direction de faisceau de commande de l'esclave et l'esclave transmet au maître soit les données de réception des signaux de recherche concernant les signaux de recherche pour la détermination de paramètres de qualité de signal (S228), reçus en provenance des directions de faisceaux du maître, soit transmet (S229) au maître les résultats d'une détermination de paramètres de qualité de signal effectuée dans l'esclave lui-même, concernant les signaux de recherche reçus en provenance des directions de faisceaux du maître,
- il est en outre déterminé si une des combinaisons de faisceaux testées dans cette boucle d'itération, en tant que deuxième orientation, correspond à un contact visuel direct (S219) et si c'est le cas (S220), on passe à la troisième phase (P3) et si ce n'est pas le cas, la boucle d'itération est à nouveau effectuée (S216) en imposant une autre direction de faisceau d'esclave ; et dans lequel
dans la troisième phase (P3)
- à partir de la première orientation ou de la deuxième orientation, un balayage fin, contrôlé par le maître, est effectué (S322, S332) pour la détermination d'une orientation fine dans un environnement d'orientation prédéterminé de la première orientation ou de la deuxième orientation, qui forme la meilleure orientation d'antenne selon des critères de qualité de signal prédéterminés, puis la meilleure orientation d'antenne déterminée est ajustée dans le maître (S323) et dans l'esclave (S33).

2. Procédé selon la revendication 1, dans lequel, dans la première orientation dans la première phase (P1),
- le maître (M) envoie le signal de recherche dans une première direction de faisceau de maître puis attend un signal de réponse pendant un temps d'attente défini et
- si aucun signal de réponse n'arrive pendant le temps d'attente, passe à une deuxième direction de faisceau de maître,
- l'esclave (S) attend, dans une direction de faisceau d'esclave correspondante, pendant un temps de séjour défini, qui est supérieur au temps d'attente, la réception du signal de recherche et
- si aucun signal de recherche n'arrive pendant le temps de séjour, passe à une direction de faisceau d'esclave suivante,
- lors de la réception d'un signal de recherche, envoie un signal de réponse dans la direction de faisceau d'esclave correspondante.

3. Procédé selon la revendication 1 ou 2, dans lequel la détermination si la première orientation correspond à un contact visuel direct du maître (M) avec l'esclave (S), comprend une détermination d'un profil de temporisation de canal d'un canal de transmission radio pour la liaison radio entre le maître et l'esclave.

4. Procédé selon au moins l'une des revendications précédentes, dans lequel la détermination si la première orientation correspond à un contact visuel direct du maître (M) avec l'esclave (S), comprend une détermination d'une période de signal ou d'une intensité de signal de réception dans la première orientation entre le maître et l'esclave.

5. Procédé selon au moins l'une des revendications précédentes, comprenant en outre
- une transmission d'une information de direction de faisceau d'esclave de l'esclave (S) au maître (M),
- une fois que la première orientation a été déterminée, le maître détermine par calcul, à l'aide de l'information de direction de faisceau d'esclave et d'une direction de faisceau de maître, si la première orientation ajustée correspond au contact visuel direct du maître avec l'esclave.

6. Procédé selon au moins l'une des revendications précédentes, dans lequel le maître (M) ou l'esclave (S) mesure, lors d'une détection d'un signal saturé, la durée de ce signal saturé, la réception du signal de recherche ou de réponse attendu étant déduite de la durée du signal saturé et d'une comparaison avec une durée de consigne d'un signal de recherche ou de réponse attendu, et il envoie une réponse prévue comme une réaction à la réception de ce signal de recherche ou de réponse.

7. Procédé selon la revendication 6, dans lequel, lorsque le maître (M) reçoit un signal de réponse saturé, une nouvelle puissance d'émission du signal de recherche est déterminée, qui est inférieure à celle utilisée auparavant, puis le maître envoie le signal de recherche avec la nouvelle puissance d'émission et dans lequel ce processus est effectué de manière itérative, jusqu'à soit qu'un échange non saturé de signal de recherche et de signal de réponse ait lieu soit qu'une existence d'un critère d'interruption soit constaté sans réception d'un signal non saturé.

8. Procédé selon au moins l'une des revendications précédentes, dans lequel plusieurs esclaves (S) sont utilisés, qui sont adressés dans différents créneaux temporels.

9. Émetteur-récepteur maître (1100) pour l'exploitation d'une liaison radio, avec
une unité d'émission-réception (1120) qui est conçue pour générer, envoyer et recevoir des signaux dans des directions réglables, par l'intermédiaire d'au moins une antenne (1125) et
une unité de commande maître (1110) qui est conçue, pour l'orientation automatique de l'au moins une antenne (1125),
dans une première phase (P1)
- pour commander l'unité d'émission-réception (1120) pour la réalisation d'un balayage pour la détermination d'une première orientation mutuelle avec un émetteur-récepteur esclave (1200), appelé esclave dans la suite, la première des orientations mutuelles réglées dans laquelle le maître et l'esclave peuvent échanger des signaux entre eux étant déterminée immédiatement en tant que telle,
- pour fixer la première orientation déterminée en tant que direction de faisceau de commande du maître, appelée direction de faisceau de commande de maître dans la suite, ainsi que, en option, en outre en tant que direction de faisceau de l'esclave, appelée direction de faisceau de commande d'esclave dans la suite,
**caractérisé en ce que** l'unité d'émission-réception est en outre conçue pour
- déterminer si la première orientation réglée correspond à un premier contact visuel du maître avec l'esclave, puis
- soit, si la première orientation réglée correspond à un contact visuel direct, on passe à une troisième phase (P3),
- soit, si la première orientation réglée ne correspond pas à un contact visuel direct,
dans une deuxième phase (P2)
- par un nombre d'itérations dans une boucle d'itération correspondante,
- pour imposer à l'esclave une nouvelle direction de faisceau d'esclave et un temps de séjour, dans lequel la réception doit s'effectuer dans cette nouvelle direction de faisceau d'esclave,
- pour envoyer ensuite des signaux de recherche dans un nombre prédéterminé des directions de faisceaux de maître sans rester pendant un temps d'attente dans les directions de faisceaux du maître,
- après l'écoulement du temps de séjour, pour ajuster la direction de faisceau de commande du maître et pour recevoir, de l'esclave, soit les données de réception de signaux de recherche, concernant les signaux de recherche reçus en provenance des directions de faisceau du maître, pour la détermination de la qualité de signal soit pour recevoir les résultats d'une détermination de qualité de signal concernant les signaux de recherche reçus en provenance des directions de faisceaux du maître,
- pour déterminer, en outre, si une des combinaisons de faisceaux testées dans cette boucle d'itération, en tant que deuxième orientation, correspond à un contact visuel direct et si c'est le cas, on passe à la troisième phase (P3) et si ce n'est pas le cas, la boucle d'itération est à nouveau effectuée en imposant une autre direction de faisceau d'esclave, et
dans la troisième phase (P3)
- à partir de la première orientation ou de la deuxième orientation, pour commander et effectuer un balayage fin, pour la détermination d'une orientation fine dans un environnement d'orientation prédéterminé de la première orientation ou de la deuxième orientation, qui forme la meilleure orientation d'antenne selon des critères de qualité de signal prédéterminés, puis pour régler la meilleure orientation d'antenne déterminée.

10. Émetteur-récepteur maître (1100) selon la revendication 9, qui est conçu, lors de la réalisation du balayage dans la première phase (P1),
- pour envoyer un signal de recherche dans une première direction de faisceau de maître puis pour attendre un signal de réponse pendant un temps d'attente défini et
- si aucun signal de réponse n'arrive après le temps d'attente, pour passer à une deuxième direction de faisceau de maître.

11. Procédé d'exploitation pour un émetteur-récepteur maître (110) d'une liaison radio, appelée maître dans la suite, avec une unité de commande (1110) et une unité d'émission-réception (1120) avec au moins une antenne (1125), dans lequel
- le maître (1100) effectue, en interaction avec un émetteur-récepteur esclave (1200), appelé esclave dans la suite, un balayage d'une première orientation mutuelle de l'au moins une antenne (1125), la première des orientations mutuelles réglées dans laquelle le maître et l'esclave peuvent échanger des signaux entre eux étant déterminée immédiatement en tant que telle,
- la première orientation déterminée est fixée comme une direction de faisceau de commande du maître, appelée direction de faisceau de commande de maître dans la suite, et une direction de faisceau de commande de l'esclave,
appelée direction de faisceau de commande d'esclave dans la suite, **caractérisé en ce que**
- il est déterminé si la première orientation réglée correspond à un contact visuel direct du maître avec l'esclave puis
- soit, si la première orientation réglée correspond à un contact visuel direct, on passe à une troisième phase (P3),
- soit, si la première orientation réglée ne correspond pas à un contact visuel direct;
dans une deuxième phase (P2)
- par un nombre d'itérations dans une boucle d'itération correspondante,
- le maître impose à l'esclave une nouvelle direction de faisceau d'esclave et un temps de séjour, dans lequel l'esclave doit recevoir dans cette nouvelle direction de faisceau d'esclave,
- le maître envoie ensuite des signaux de recherche dans un nombre prédéterminé de ses directions de faisceaux de maître sans rester pendant un temps d'attente dans les directions de faisceaux du maître,
- après l'écoulement du temps de séjour, le maître ajuste la direction de faisceau de commande du maître et l'esclave ajuste la direction de faisceau de commande de l'esclave et reçoit, de l'esclave, soit les données de réception des signaux de recherche concernant les signaux de recherche pour la détermination de paramètres de qualité de signal, reçus en provenance des directions de faisceaux du maître, reçoit les résultats d'une détermination de paramètres de qualité de signal effectuée dans l'esclave lui-même, concernant les signaux de recherche reçus en provenance des directions de faisceaux du maître,
- il est en outre déterminé si une des combinaisons de faisceaux testées dans cette boucle d'itération, en tant que deuxième orientation, correspond à un contact visuel direct et si c'est le cas, on passe à la troisième phase (P3) et si ce n'est pas le cas, la boucle d'itération est à nouveau effectuée en imposant une autre direction de faisceau d'esclave, et dans lequel
dans la troisième phase (P3)
- à partir de la première orientation ou de la deuxième orientation, un balayage fin, contrôlé par le maître, est effectué pour la détermination d'une orientation fine dans un environnement d'orientation prédéterminé de la première orientation ou de la deuxième orientation, qui forme la meilleure orientation d'antenne selon des critères de qualité de signal prédéterminés, puis la meilleure orientation d'antenne déterminée est ensuite ajustée dans le maître.

12. Émetteur-récepteur esclave (1200), appelé esclave dans la suite, pour l'exploitation d'une liaison radio, avec
une unité d'émission-réception (1220), qui est conçue pour générer, émettre et recevoir des signaux dans des directions réglables par l'intermédiaire d'au moins une antenne (1225) et
une unité de commande esclave (1210), qui est conçue, pour l'orientation automatique de l'au moins une antenne (1225),
dans une première phase (P1)
- pour commander l'unité d'émission-réception (1220) pour la réalisation d'un balayage pour la détermination d'une première orientation mutuelle avec un émetteur-récepteur maître (1100), appelé maître dans la suite, la première des orientations mutuelles réglées dans laquelle le maître et l'esclave peuvent échanger des signaux entre eux étant déterminée immédiatement en tant que telle,
- pour fixer la première orientation déterminée en tant que direction de faisceau de commande de l'esclave, appelée direction de faisceau de commande d'esclave dans la suite,
**caractérisé en ce que** l'unité d'émission-réception esclave est en outre conçue pour
- déterminer si la première orientation réglée correspond à un premier contact visuel du maître avec l'esclave,
- déterminer une direction de faisceau de commande de l'esclave, appelée direction de faisceau d'esclave dans la suite,
- soit, si la première orientation réglée correspond à un contact visuel direct, on passe à une troisième phase (P3),
- soit, si la première orientation réglée ne correspond pas à un contact visuel direct,
dans une deuxième phase (P2)
- par un nombre d'itérations dans une boucle d'itération correspondante,
- pour recevoir et ajuster une nouvelle direction de faisceau d'esclave imposée par le maître et un temps de séjour, dans lequel l'esclave doit recevoir dans cette nouvelle direction de faisceau d'esclave,
- pour recevoir ensuite, pendant le temps de séjour, les signaux de recherche émis par le maître dans un nombre prédéterminé de directions de faisceaux de maître,
- après l'écoulement du temps de séjour, pour ajuster la direction de faisceau de commande de l'esclave et pour transmettre au maître soit les données de réception du signal de recherche, concernant les signaux de recherche reçus en provenance des directions de faisceaux du maître, pour la détermination de la qualité du signal, soit transmettre au maître les résultats d'une détermination de qualité de signal effectuée dans l'esclave lui-même, concernant les signaux de recherche reçus en provenance des directions de faisceaux du maître,
- pour déterminer, en outre, si une des combinaisons de faisceaux testées dans cette boucle d'itération en tant que deuxième orientation correspond à un contact visuel direct et si c'est le cas, on passe à la troisième phase (P3) et si ce n'est pas le cas, la boucle d'itération est à nouveau effectuée en imposant une autre direction de faisceau d'esclave, et
dans la troisième phase (P3)
- à partir de la première orientation ou de la deuxième orientation, pour commander et effectuer un balayage fin, pour la détermination d'une orientation fine dans un environnement d'orientation prédéterminé de la première orientation ou de la deuxième orientation, qui forme la meilleure orientation d'antenne selon des critères de qualité de signal prédéterminés, puis pour régler la meilleure orientation d'antenne déterminée.

13. Esclave (1200) selon la revendication 12, dans lequel l'unité de commande esclave (1210) est conçue, lors du balayage dans la première phase (P1),
- pour attendre, dans une première direction de faisceau d'esclave, pendant un temps de séjour défini, qui est supérieur au temps de séjour du maître (1100), la réception d'un signal de recherche du maître et
- si aucun signal de recherche n'arrive après le temps de séjour, pour passer à une deuxième direction de faisceau d'esclave,
- lors de la réception d'un signal de recherche, pour envoyer un signal de réponse dans la première direction de faisceau d'esclave.

14. Procédé d'exploitation pour un émetteur-récepteur esclave (1200), appelé esclave dans la suite, avec une unité de commande (1210) et une unité d'émission-réception (1220) avec au moins une antenne (1225), dans lequel
- l'esclave effectuer avec le maître (110), à l'aide d'un nombre prédéterminé d'orientations mutuelles, un balayage pour la détermination de la première orientation, la première des orientations mutuelles réglées dans laquelle le maître et l'esclave peuvent échanger des signaux entre eux étant déterminée immédiatement en tant que telle et
- la première orientation déterminée est fixée en tant que direction de faisceau de commande de l'esclave, appelée direction de faisceau de commande d'esclave dans la suite,
**caractérisé en ce que**
- il est déterminé si la première orientation réglée correspond à un contact visuel direct du maître avec l'esclave, puis,
- soit, si la première orientation réglée correspond à un contact visuel direct, on passe à une troisième phase (P3),
- soit, si la première orientation réglée ne correspond pas à un contact visuel direct,
dans une deuxième phase (P2)
- sur un nombre d'itérations dans une boucle d'itération correspondante
- l'esclave se voit imposer par le maître et règle une nouvelle direction de faisceau d'esclave et un temps de séjour, dans lequel l'esclave doit recevoir dans cette nouvelle direction de faisceau d'esclave,
- puis les signaux de recherche émis par le maître pendant le temps de séjour dans un nombre prédéterminé de directions de faisceaux de maître sont reçus,
- après l'écoulement du temps de séjour, la direction de faisceau de commande d'esclave est réglée et soit les données de réception des signaux de recherche concernant les signaux de recherche pour la détermination de paramètres de qualité de signal, reçus en provenance des directions de faisceaux du maître, sont transmis au maître, soit les résultats d'une détermination de paramètres de qualité de signal effectuée dans l'esclave lui-même, concernant les signaux de recherche reçus en provenance des directions de faisceaux du maître, sont transmis au maître,
- il est en outre déterminé si une des combinaisons de faisceaux testées dans cette boucle d'itération en tant que deuxième orientation correspond à un contact visuel direct et si c'est le cas, on passe à la troisième phase (P3) et si ce n'est pas le cas, la boucle d'itération est à nouveau effectuée en imposant une autre direction de faisceau d'esclave ; et dans lequel
- dans la troisième phase (P3)
- à partir de la première orientation ou de la deuxième orientation, un balayage fin est effectué pour la détermination d'une orientation fine dans un environnement d'orientation prédéterminé de la première orientation ou de la deuxième orientation, qui forme la meilleure orientation d'antenne selon des critères de qualité de signal prédéterminés, puis la meilleure orientation d'antenne déterminée est ajustée dans l'esclave.

15. Dispositif radio (1000) comprenant un émetteur-récepteur maître (1100) selon la revendication 9 ou 10 et au moins un émetteur-récepteur esclave (1200) selon la revendication 12 ou 13.

16. Émetteur-récepteur comprenant, sous une forme intégrée, un émetteur-récepteur maître (100) selon la revendication 9 ou 10 et au moins un émetteur-récepteur esclave (1200) selon la revendication 12 ou 13.
